# EUROPEAN PATENT SPECIFICATION

(11) **EP 1 836 235 B1**
(45) Date of publication and mention of the grant of the patent: **17.11.2010**
(21) Application number: 05853074.2
(22) Date of filing: 07.12.2005
(51) Int. Cl.: C08G 64/14, C08K 5/42, C08L 69/00

(54) **POLYCARBONATES WITH FLUOROALKYLENE CARBONATE END GROUPS**
POLYCARBONATE MIT FLUORALKYLENCARBONAT-ENDGRUPPEN
POLYCARBONATES DOTES DE GROUPES TERMINAUX CARBONATE DE FLUOROALKYLENE

(30) Priority: 22.12.2004 US 22535; 25.10.2005 US 258413
(43) Date of publication of application: 26.09.2007
(73) Proprietor: SABIC Innovative Plastics IP B.V., 4612PX Bergen op Zoom (NL)
(72) Inventor: DAVIS, Gary, Charles, Albany, NY 12205 (US); DHARA, Dibakar, Whitefield Bangalore 560 066 (IN); MULLEN, Brian, D., Mount Vernon, IN 47620 (US); STONE, Joshua, James, Worcester, NY 12197 (US)
(74) Representative: Modiano, Micaela Nadia
(86) International application number: PCT/US2005/044058
(87) International publication number: WO 2006/068818

(56) References cited:
- WO-A-2005/059006
- US-A- 3 036 040
- US-A- 5 242 973
- DATABASE CA [Online] CHEMICAL ABSTRACTS SERVICE, COLUMBUS, OHIO, US; SUZUKI, HAJIME ET AL: "Electrophotographic photoreceptors with good abrasion resistance and smooth surface and electrophotographic apparatus having them" XP002374505 retrieved from STN Database accession no. 142:472568 & JP 2005 121926 A2 (SHINDENGEN ELECTRIC MFG. CO., LTD., JAPAN; YAMANASHI ELECTRONICS CO.,) 12 May 2005 (2005-05-12)

## Description

This application relates to polycarbonate and co-polycarbonate resins, which have fluoroalkylene carbonate end groups, methods to make these polycarbonates, blends of these polycarbonates with other polycarbonates, co-polycarbonates and other thermoplastics, articles made from polycarbonates having fluoroalkylene carbonate end-groups and their blends, and uses of articles made from polycarbonates having fluoroalkylene carbonate end-groups.

Polycarbonate resins have found wide use in consumer items, the automotive industry, medical industry and the building and construction industry as well as many other markets, because of their high heat and impact resistance, and their ability to form very useful blends with other resins. These properties, along with the design flexibility that polycarbonates provide, allow them to be excellent replacements for less design-flexible and often more expensive metals, wood and other engineering materials. One very highly desirable property of many polycarbonate resins is their transparency, which, in combination with their heat resistance and high impact resistance, allows them to replace glass or other transparent thermoplastics in many consumer markets such as the ophthalmic, the optical media, the medical and the building and construction markets.

One property of polycarbonate resins, which, if it could be improved, would lead to still further expansion of the consumer and industrial uses of polycarbonate resins, is an improvement in surface properties. Molded polycarbonate resins having a high tendency to repel water on their surface would be especially useful. Such resins could find use in the ophthalmic, optical media, automotive, medical and building and construction industries and many other industries that require this property. It would similarly be desirable to improve the flame retardant properties (also referred to as "FR") of polycarbonate resin articles, especially those having a very thin wall thickness. It is desirable to have polycarbonate resin articles that pass UL94 testing at wall thickness of 2.3 mm, 1.8 mm, and in some cases at 1.5 mm or less.

Fluorinated compounds are known to change the surface features of polycarbonate resins and articles formed from them. Melt blending a fluorinated compound, such as polytetrafluoroethylene, into a polycarbonate resin composition, often produces improvements in flame retardance, surface friction and water repellence, but it also typically results in an opaque or translucent appearance. Melt blends of polycarbonates and fluorinated compounds can also be different to mold because the fluorinated additive can build on the mold surface, causing degradation of the surface quality of resultant molded articles. A better method for introducing fluorinated compounds into a polycarbonate resin composition would be to chemically bond the fluorinated compound directly to the polycarbonate resin chains as a co-monomer or as an end-group (the words "end-group" and "end-cap" refer to monofunctional chemicals that bond to the end of polymer chains, typically inhibiting further chain growth). This approach is thought to help avoid the mold surface build-up problems mentioned above. The incorporation of fluorinated end-groups into polycarbonate resins would be a particularly simple and cost effective solution. However, a particular challenge to this approach is the tendency of many fluorinated end-group structures to undergo chemical or thermal reactions during the formation of the polycarbonate resin or in subsequent extrusion or molding operations. Such reactions can result in the detachment of the fluorinated end-cap from the polycarbonate resin chains, and resulting loss of the desirable properties.

The present invention provides for a polycarbonate resin composition having fluorinated end-groups that are highly stable during polycarbonate resin formation reactions and subsequent extrusion and molding processes. The fluorinated end-groups can be readily incorporated into polycarbonate resins using a variety of polycarbonate resin formation methods. The molded articles from these compositions exhibit unusual and useful surface features, and possess excellent thin wall FR properties.

### BRIEF SUMMARY OF DRAWINGS

Referring now to the following Figures in which:

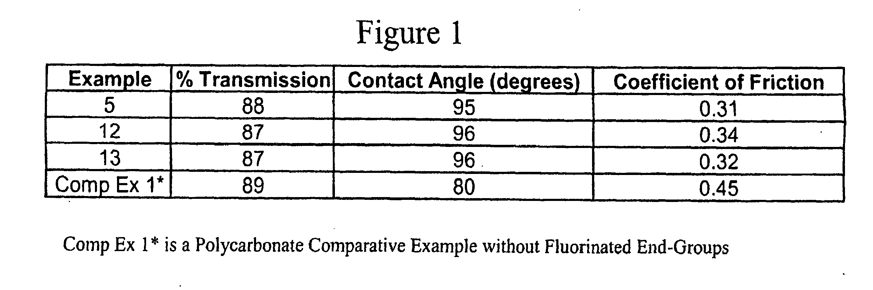

Figure 1 is a table that compares the contact angle and coefficient of friction for 3 different polycarbonate resins having different fluoroalkylene carbonate end-groups (Examples 5, 12 and 13) with a polycarbonate resin having p-cumylphenol carbonate end-groups (Comp. Ex. 1*).

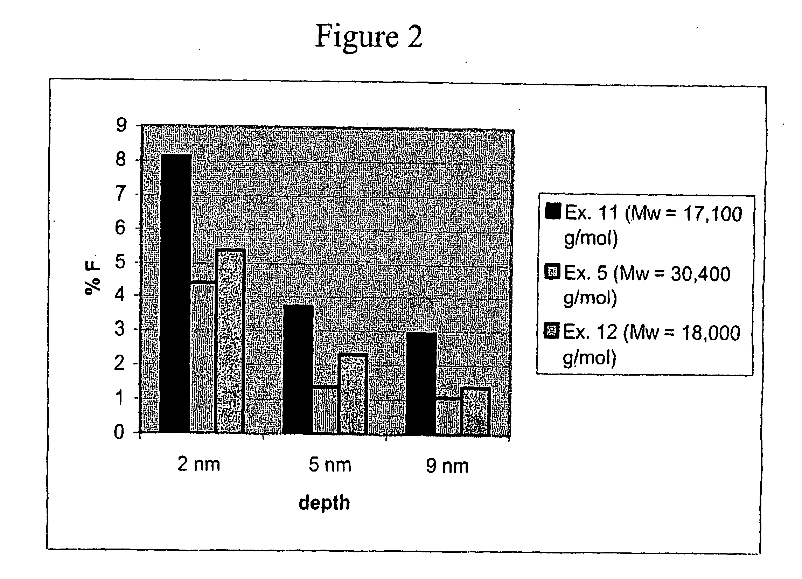

Figure 2 is a bar graph that compares the % fluorine at 3 different depths (2 nm., 5 nm. and 9 nm) using an XPS measurement method for 3 plaques molded from polycarbonate resins having fluoroalkylene carbonate end-groups.
Figure 3 is a Table that compares the FR performance of FR test bars molded from 6 polycarbonate resins having fluoroalkylene carbonate end-groups (Examples 24A, 24B, 24C, 24D and 25) with 3 polycarbonate resins having p-cumylphenol carbonate end-groups (Comp. Ex. 2*, 3* and 4*).
Figure 4 is a graph comparing the dYI (change in Yellowness Index) over time for molded plaques made from a polycarbonate resin having fluoroalkylene-carbonate end-groups (labeled "Ex. 5") and a polycarbonate resin having p-cumylphenol carbonate end-groups (labeled "PC") after exposure to gamma radiation at 25 kGy.
Figure 5 is a plot of portions of the Raman Spectra obtained from a polycarbonate resin having trifluoroethylene carbonate end-groups (TFE-PC) and a polycarbonate resin having p-cumylphenol end-groups (PC Control).
Figure 6 is a Table comparing the position of the ¹⁹F NMR resonance frequencies (in ppm) for 3 polycarbonate resins having fluorinated end-groups (TFE-PC, HFIP-PC, C₉F₁₇-PC) with the small molecule fluorinated alcohol compounds from which they were made (TFE-OH, HFIP-OH, C₉F₁₇-OH).
Figure 7 is a visual representation of a water droplet on a molded plaque formed from a polycarbonate resin illustrating the contact angles, which are measured and reported in Table I and in the Examples section of this application.
Figure 8 is a Table that compares the FR performance of FR test bars molded from 3 polycarbonate resins having fluoroalkylene carbonate end-groups (Examples 27, 28 and 29) with 3 polycarbonate resins having p-cumylphenol carbonate end-groups (Comp. Ex. 5*, 6* and 7*) and Rimar salt as the FR additive.

### BRIEF DESCRIPTION OF THE INVENTION

The present invention relates to polycarbonate resin compositions having fluoroalkylene carbonate end groups, methods for making said compositions, and articles formed from said compositions.

In one aspect of the invention, it is provided a polycarbonate composition comprising: an aromatic polycarbonate resin having fluoroalkylene carbonate end-groups and a flame retardant additive selected from the group consisting of C₂₋₁₆ perfluoroalkyl sulfonate salts, and potassium diphenylsulfone sulfonate, wherein the fluoroalkylene carbonate end-groups comprise 90% or greater of the total end-groups of the aromatic polycarbonate resin.

In another aspect, it is provided an article comprising the composition of the present invention.

In another aspect, the present invention provides a method for improving the flame retardancy of a polycarbonate resin formulation comprising combining an aromatic polycarbonate resin, said aromatic polycarbonate resin having fluoroalkylene carbonate end groups, and a flame retardant additive selected from the group consisting of C₂₋₁₆ perfluoroalkyl sulfonate salts and potassium diphenylsulfone sulfonate, wherein the fluoroalkylene carbonate end-groups comprise 90% or greater of the total end-groups of the aromatic polycarbonate resin.

In still another aspect, the present invention provides a method for making a flame retardant polycarbonate resin with fluoroalkylene carbonate end-groups, said method comprising the steps of producing a fluoroalkylene chloroformate and then adding the fluoroalkylene chloroformate to a mixture comprising an aromatic dihydroxy compound, phosgene, an organic solvent, water, an organic base, and an inorganic base, and further adding an inorganic flame retardant comprising at least one of a salt of C₂₋₁₆ perfluoroalkyl sulfonate salts or potassium diphenylsulfone sulfonate or mixtures thereof.

In yet another aspect, the present invention provides a method for making a flame retardant polycarbonate resin comprising melt condensing a mixture comprising a fluorinated alcohol, an aromatic dihydroxy aromatic compound, a diaryl carbonate in the presence of a transesterification catalyst, and further adding a flame retardant comprising at least one of a salt of C₂₋₁₆ perfluoroalkyl sulfonate salts or potassium diphenylsulfone sulfonate or mixtures thereof.

### DETAILED DESCRIPTION OF THE INVENTION

The present invention may be understood more readily by reference to the following detailed description of the invention and the examples included therein, but the claims are intended to define the invention and these embodiments should not be read to limit the breadth of the claims. In the following specification and the claims which follow, reference will be made to a number of terms which shall be defined to have the following meanings:
The singular forms "a", "an" and "the" include plural referents unless the context clearly dictates otherwise.
"Optional" or "optionally" means that the subsequently described event or circumstance may or may not occur, or that the subsequently defined element or ingredient may or may not be present and that the description includes instances where the event occurs and instances where it does not.
The term "carbonate end group" refers to the chemical structure present at the ends of the polycarbonate chains attached to the polycarbonate chains through the final carbonate linkage on the polycarbonate chains. The specific type of "carbonate end-group" refers to the type of hydroxy compound from which the "carbonate end-group" was formed. For example, a phenol "carbonate end-group" would have the chemical structure (C₆H₅-O-C(O)-O-).

The general term "fluoroalkylene carbonate end group" refers to a fluoroalkylene group attached to the last carbonate group of the polycarbonate chain and formed from its reaction with a fluoroalkylene alcohol.

For example, a "trifluoroethylene carbonate" end group formed from a carbonate group's reaction with CF₃-CH₂-OH would have the chemical structure (CF₃CH₂-O-C(O)-O-)_{.}

The term "percent or percentage of end groups" means that percentage of end groups at the end of a polycarbonate resin chain out of a total of 100%, which possess an end group structure of a particular type as determined by an end group characterization technique such as NMR. For example, 90% fluoroalkylene carbonate end groups refers to the fact that for a particular polycarbonate resin composition, 90% of the polycarbonate resin end-groups (two per chain, if linear) are fluoroalkylene carbonate end-groups and the remaining 10% end groups have some other chemical structure.

The term "fluorinated" or "fluoroalkylene" refers to alkylene structures that have one or more fluorines on the alkylene chain.

As used herein the term alkylene refers to a radical having a valence of at least one comprising a linear or branched array of atoms, which is not cyclic. The array may include heteroatoms such as nitrogen, oxygen, sulfur, silicon, and phosphorous or may be composed exclusively of carbon and hydrogen. Examples of aliphatic radicals include methyl, methylene, ethyl, ethylene, hexyl, hexamethylene, trifuoromethyl, trifluoroethyl, methoxy, ethyloxy, oxyethyleneoxy, trimethylsilyl, and the like. Aliphatic radicals may be substituted or unsubstituted and may comprise one or more substituents including amino groups, halogen atoms, cyano groups, nitro groups, hydroxyl groups, mercapto groups, C₁-C₁₀ alkyl groups, C₁-C₁₀ alkoxy groups, C₁-C₁₀ alkoxycarbonyl groups, C₁-C₁₀ alkylthio groups, C₁-C₁₀ alkylamino groups, and the like.

As used herein the term "cycloalkylene" refers to a radical having a valance of at least one comprising an array of atoms which is cyclic but which is not aromatic. The array may include heteroatoms such as nitrogen, oxygen, sulfur, silicon, and phosphorous or may be composed exclusively of carbon and hydrogen. Examples of cycloaliphatic radicals include cyclopropyl, cyclopentyl cyclohexyl, tetrahydrofuranyl and the like. Cycloaliphatic radicals may be substituted or unsubstituted and may comprise one or more substituents including amino groups, halogen atoms, cyano groups, nitro groups, hydroxyl groups, mercapto groups, C₁-C₁₀ alkyl groups, C₁-C₁₀ alkoxy groups, C₁-C₁₀ alkoxycarbonyl groups, C₁-C₁₀ alkylthio groups, C₁-C₁₀ alkylamino groups, and the like. As used herein the term cycloaliphatic radical includes structures comprising a plurality of non-aromatic cyclic arrays, for example the 2-tetralinyl radical.

As used herein the term "aromatic radical" refers to a radical having a valence of at least one comprising at least one aromatic group. Examples of aromatic radicals include phenyl, pyridyl, furanyl, thienyl, naphthyl, phenylene, biphenyl, and biphenylene. The term includes groups containing both aromatic and aliphatic and/or cycloaliphatic components, for example a benzyl group or an indanyl group. Aromatic radicals may be substituted or unsubstituted and may comprise one or more substituents including amino groups, halogen atoms, cyano groups, nitro groups, hydroxyl groups, mercapto groups, C₁-C₁₀ alkyl groups, C₁-C₁₀ alkoxy groups, C₁-C₁₀ alkoxycarbonyl groups, C₁-C₁₀ alkylthio groups, C₁-C₁₀ alkylamino groups, and the like.

"BPA" is herein defined as bisphenol A and is also known as 2,2-bis(4-hydroxyphenyl)propane; 4,4'-isopropylidenediphenol; and p,p-BPA.

The terms "end-capping agent" or "chain stoppers" refer to monofunctional chemicals that, when present in the polycarbonate resin formation reaction, stop polycarbonate chain growth. A fluoroalkylene alcohol, as mentioned above, is an example of a type of "end-capping agent" or "chain stopper."

The term "repeating unit" refers to a part of a copolymer structure corresponding to one repeating unit. For example a dimethylsiloxane repeating unit would refer to one repeating segment corresponding to the chemical formula -[OSi(CH₃)₂]-.

The term "article" designates any and all items that are formed from molding, extrusion, casting, lamination, or otherwise processing items.

The present invention involves polycarbonate resin compositions having fluoroalkylene carbonate end-groups. The fluoroalkylene carbonate end-groups of the present invention are formed during the polycarbonate formation reaction from fluoroalkylene alcohols, which are present as end-capping agents in the polycarbonate formation reaction.

Preferred fluorinated alcohols have the general structure 1 below: 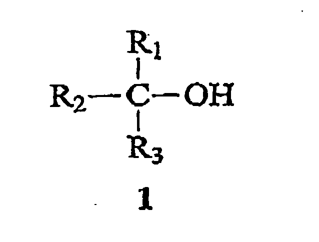 where R₁ is H, R₂ is H, alkylene, aromatic, or CF₃, or other fluoroalkylene, and R₃ is CF₃, or other fluoroalkylene, such as, for example, a fluoroalkylene of the formula -(CF₂)ₓ-CF₃ where x is 1 to 20, or a perfluoroalkyl polyether with the formula -CH₂-(CF₂-CF₂-O-)ₙ-CF₃ (M_{w} of about 100 to 5000), or a fluorinated surfactant with the structure, R_{f}-(CH₂-CH₂-O)ₓH, where R_{f} is F(CF₂-CF₂)₃₋₈ with a Mw of about 170 to 5000. Chiral fluorinated alcohols, such as CF₃-CFH-CF₂-CH₂-OH, or CF₃-(CF₂)ₓ-CFH-CF₂-CH₂-OH where x is 1 to 20 can also be used in the present invention.

The polycarbonate resins of this invention are formed from aromatic dihydroxy compounds and a carbonate source. Some illustrative, non-limiting compounds of this invention include aromatic dihydroxy compounds and the dihydroxy-substitated aromatic hydrocarbons such as those disclosed by name or formula (generic or specific) in U.S. Patent No. 4,217,438. A nonexclusive list of specific examples of the types of bisphenol compounds that may be represented by structure 4 includes the following: 1,1-bis(4-hydroxyphenyl)methane; 1,1-bis(4-hydroxyphenyl) ethane; 2,2-bis(4-hydroxyphenyl) propane (hereinafter "bisphenol A" or "BPA"); 2,2-bis(4-hydroxyphenyl) butane; 2,2 bis(4-hydroxyphenyl) octane; 1,1-bis(4-hydroxyphenyl) propane; 1,1-bis(4-hydroxyphenyl) n-butane; bis(4-hydroxyphenyl) phenylmethane; 2,2-bis(4-hydroxy-1-methylphenyl) propane; 1,1-bis(4-hydroxy-t-butylphenyl) propane; bis(hydroxyaryl) alkanes such as 2,2-bis(4-hydroxy-3-bromophenyl) propane; 1,1-bis(4-hydroxyphenyl) cyclopentane; 4,4'-biphenol ;and bis(hydroxyaryl) cycloalkanes such as 1,1-bis(4-hydroxyphenyl) cyclohexane; and the like as well as combinations comprising at least one of the foregoing aromatic dihydroxy compound.

Some non-limiting carbonate sources of this invention include phosgene, diphosgene and diarylcarbonates.

It is also possible to include aliphatic or aromatic diacids or their diacid chlorides as co-monomers with aromatic dihydroxy compounds in the present invention. Generally, useful aliphatic diacids have about 2 to about 40 carbons. A preferred aliphatic diacid is dodecandioic acid. Possible aromatic diacids include but are not limited to terephthalic and isophthalic acids. Aliphatic di-alcohols, such as ethylene glycol, can also be employed in this invention.

Hydroxyaryl-terminated polydiorganosiloxanes may be used in combination with fluorinated alcohols and the dihydric phenols, aliphatic or aromatic diacids to form fluoroalkylene end-capped polycarbonate copolymers containing polydiorganosiloxane blocks. Hydroxyaryl-terminated polydiorganosiloxanes can be made in the manner described in US Patent No. 5,530,083. Some non-limiting examples of the aliphatically unsaturated monohydric phenols which can be used to make the hydroxyaryl-terminated polydiorganosiloxanes are: 2-methoxy-4-alkylphenol (also known as eugenol), 2-allylphenol, 4-allyl-2-methylphenol, 4-allyl-2-phenylphenol, 4-allyl-2-bromophenol, 4-allyl-2-t-butoxyphenol, 2-methyl-4-propargylphenol, 2-allyl-4,6-dimethylphenol, 2-allyl-4-bromo-6-methylphenol, 2-allyl-6-methoxy-4-methylphenol and 2-allyl-4,6-dimethylphenol. Some non-limiting examples of the hydroxyaryl-terminated polydiorganosiloxanes used in this invention are phenol-siloxanes included within the formula of structure 2: 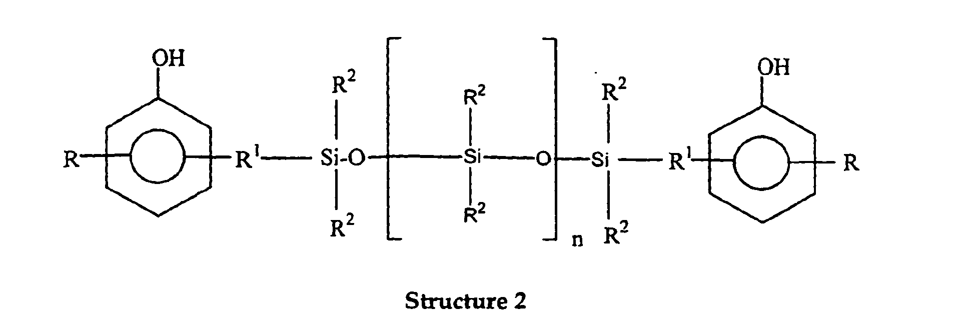 where each R may be the same or different and is selected from the group of radicals consisting of hydrogen, halogen, C₍₁₋₈₎ alkoxy, C₍₁₋₈₎ alkyl and C₍₆₋₁₃₎ aryl, R¹ is a C₍₂₋₈₎ divalent aliphatic radical, each R² is independently a C₍₁₋₁₃₎ monovalent organic radical, and n is an integer greater than or equal to 1, optionally greater than or equal to 6, optionally greater than or equal to 10, or optionally greater than or equal to 25, or optionally greater than or equal to 40. It is also desirable to have n be an integer less than or equal to 1000, optionally less than or equal to 100, or optionally less than or equal to 75, or optionally less than or equal to 60. In one embodiment n is less than or equal to 50. In another embodiment, n is an integer from 30 to 60. As used hereinafter, diorganosiloxy units are defined as the portion -[R²-SiO-R²]- of the formula shown above. Non-limiting examples of suitable hydroxyaryl-terminated polydiorganosiloxanes are those where R² is methyl and R is hydrogen or methoxy and is located in the ortho position to the hydroxy group and R¹ is propyl and is located ortho or para to the hydroxyl group.

Other examples of suitable hydroxyaryl-terminated polydiorganosiloxanes include those described in U.S. Patent Nos. 4,746,701 to Kress et al., which is incorporated herein by reference. Specifically, the polysiloxane block may be derived from a polydiorganosiloxane having the structure 3: 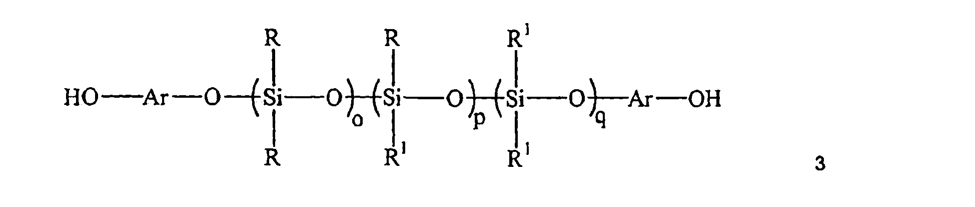 wherein the radicals Ar are identical or different arylene radicals from diphenols with preferably 6 to 30 carbon atoms; R and R¹ are identical or different and denote linear alkyl, branched alkyl, halogenated linear alkyl, halogenated branched alkyl, aryl or halogenated aryl, but preferably methyl, and the number of the diorganosiloxy units (the sum o + p + q) is about 5 to about 120.

In combination with the fluorinated alcohols, other end-capping agents may be present in the polycarbonate formation reaction to form a mixture of fluorinated and non-fluorinated carbonate end groups. Possible, non-limiting examples of non-fluorinated hydroxy aromatic compounds useful as end-capping agents include p-cumylphenol, phenol, p-tert-butylphenol, cardinol, octylphenol, nonylphenol and other end-capping agents that are well known in the art or any combination of the above. In addition to fluorinated alcohols, perfluorinated or partially fluorinated aromatic dihydroxy compounds such as pentafluorophenol or trifluorophenol can be present as end-capping agents. The partially fluorinated hydroxy aromatic compounds can have additional aliphatic or aromatic substituent groups in place of hydrogen on the partially fluorinated aromatic ring.

The polycarbonate resins having fluoroalkylene carbonate end groups can be formed by a variety of standard methods for forming polycarbonate resins well known in to those skilled the art, and include the interfacial, melt condensation and polycarbonate solid state reaction processes. Because the fluorinated alcohols used to form the fluoroalkylene carbonate end groups are also present in the polycarbonate formation processes as end-capping agents to control the molecular weight of the polycarbonate resin composition, it is desirable that the reaction conditions employed in any of the above three methods are selected to achieve high incorporation of the fluorinated alcohols into the polycarbonate resin compositions. Examples of methods to achieve such conditions are briefly described below.

The types of interfacial processes that can be employed include those well known in the art involving water, an organic solvent, such as methylene chloride, an organic base such as a trialkylamine or a phase transfer catalyst, a fluorinated alcohol, an aromatic dihydroxy compound, and phosgene. Alternatively a chloroformate process can be used in which the fluorinated alcohol is converted into a chloroformate by reaction with phosgene and then combined with an aromatic dihydroxy compound, water, an organic solvent, an organic base or phase transfer catalyst, and additional phosgene. The chloroformate formation reaction can be conducted in a standard reactor design (for example, a continuous stirred tank) or in a tubular reactor as described, for example, in U.S. Patent No. 6,780,961.

When an interfacial reaction process is employed, conducting the reaction at a pH of 12 or greater for at least part of the reaction time is often desirable to ensure greater than 90% incorporation of the fluorinated alcohol into the polycarbonate resin and achieve the targeted molecular weight of the polycarbonate resin. When a chloroformate process is employed it is often not necessary to conduct the reaction at the higher pH level.

Melt condensation processes, which are well known in the art, can also be employed to form fluoroalkylene carbonate end-capped polycarbonate resins. The compositions could include a combination of a fluorinated alcohol, an aromatic dihydroxy compound, and a diarylcarbonate in combination with a transesterification catalyst. A variety of transesterification catalysts and combinations of catalysts well known in the art can be employed to form the fluoroalkylene carbonate end-capped polycarbonate resins. The use of fluorinated alcohols that have boiling points greater than 220°C are desirable to avoid having loss of the fluorinated alcohol through evaporation during the melt polymerization process, resulting in low incorporation of the fluorinated alcohol into the polycarbonate resin composition and difficulty in controlling the molecular weight of the polycarbonate resin composition. Lower boiling fluorinated alcohols can be employed but require special care to avoid loss. Pressurized reactors or pre-reaction processes to form oligomeric polycarbonates with fluoroalkylene carbonate end-groups are alternate or additional means to incorporate lower boiling fluorinated alcohols into a melt condensation process alternate or additional.

Melt polymerization processes can often be accelerated by the use of activated dicarbonates alone or in combination with a non-activated diarylcarbonate. Activated carbonates are defined in the present invention as those diarylcarbonates that are more reactive to dihydroxy aromatic compounds than diphenylcarbonate. In one embodiment of a melt polymerization method for forming polycarbonate resins with alkylene carbonate end-groups, the activated carbonate, bis(methylsalicyl)carbonate, is used in combination with a fluorinated alcohol, an aromatic dihydroxy compound and a transesterification catalyst.

The polycarbonate resin compositions having fluoroalkylene carbonate end-groups of the present invention can also be blended with a variety of other polycarbonate homo and copolymers with or without fluoro alkylene end-groups as well as other thermoplastics. Some non-limiting examples of possible other thermoplastics include: polyamides, polyimides, polyesters; olefin polymers such as ABS or MBS, polystyrene, and polyethylene; polysiloxanes, polysilanes, polysulfones and polytetrafluoroethylene or any combination thereof.

The polymer compositions may contain various additives, which may be used alone or in combination. These additives include such materials as thermal stabilizers, antioxidants, UV stabilizers, plasticizers, visual effect enhancers, extenders, antistatic agents, catalyst quenchers, mold releasing agents, fire retardants, blowing agents, impact modifiers and processing aids. The different additives that can be incorporated in the polymer compositions of the present invention are typically commonly used and known to those skilled in the art.

Visual effect enhancers, sometimes known as visual effects additives or pigments, may also be present in the polycarbonate resin compositions of the present invention. The visual effects additives can be incorporated into the composition in an encapsulated form, a non-encapsulated form, or laminated to a particle comprising polymeric resin. Some non-limiting examples of visual effects additives are aluminum, gold, silver, copper, nickel, titanium, stainless steel, nickel sulfide, cobalt sulfide, manganese sulfide, metal oxides, white mica, black mica, pearl mica, synthetic mica, mica coated with titanium dioxide, metal-coated glass flakes, and colorants. The visual effect additive may have a high or low aspect ratio and may comprise greater than 1 facet. Dyes may be employed such as Solvent Blue 35, Solvent Blue 36, Disperse Violet 26, Solvent Green 3, Anaplast Orange LFP, Perylene Red, and Morplas Red 36. Fluorescent dyes may also be employed including, but not limited to, Permanent Pink R (Color Index Pigment Red 181, from Clariant Corporation), Hostasol Red 5B (Color Index #73300, CAS # 522-75-8, from Clariant

Corporation) and Macrolex™ Fluorescent Yellow 10GN (Color Index Solvent Yellow 160:1, from Bayer Corporation). Pigments such as titanium dioxide, zinc sulfide, carbon black, cobalt chromate, cobalt titanate, cadmium sulfides, iron oxide, sodium aluminum sulfosilicate, sodium sulfosilicate, chrome antimony titanium rutile, nickel antimony titanium rutile, and zinc oxide may be employed. Visual effect additives in encapsulated form usually comprise a visual effect material such as a high aspect ratio material like aluminum flakes encapsulated by a polymer. The encapsulated visual effect additive has the shape of a bead.

Non-limiting examples of antioxidants that can be used in the polymer compositions of the present invention include tris(2, 4-di-tert-butylphenyl)phosphite; 3,9-di(2, 4-di-tert-butylphenoxy)-2,4,8,10-tetraoxa-3,9- diphosphaspiro[5.5]undecane; 3,9-di(2,4-dicumylphenoxy)-2,4,8,10-tetraoxa-3,9-diphosphaspiro[5.5]undecane; tris(p-nonylphenyl)phosphite; 2,2',2"- nitrilo[triethyl-tris[3,3',5,5'-tetra-tertbutyl-1,1'-biphenyl-2'- diyl]phosphite]; 3, 9-distearyloxy-2,4,8,10-tetraoxa-3,9-diphosphaspiro[5. 5]undecane; dilauryl phosphite; 3,9-di[2,6-di-tert-butyl-4-methylphenoxy]-2, 4, 8, 10-tetraoxa-3,9-diphosphaspiro[5.5]undecane; tetrakis( 2, 4-di-tert-butylphenyl)-4, 4'-bis(diphenylene)phosphonite; distearyl pentaerythritol diphosphite; diisodecyl pentaerythritol diphosphite; 2, 4, 6-tri-tert-butylphenyl-2-butyl-2-ethyl-1,3-propanediol phosphite; tristearyl sorbitol triphosphite; tetrakis(2, 4-di-tert-butylphenyl)-4,4'- biphenylene diphosphonite; (2, 4, 6-tri-tert-butylphenyl)-2-butyl-2-ethyl-1, 3-propanediolphosphite; triisodecylphosphite; and mixtures of phosphites containing at least one of the foregoing. Tris(2, 4-di-tert-butylphenyl) phosphite; 2,4,6-tri-tert-butylphenyl-2-butyl-2-ethyl-1,3-propanediol phosphite; bis(2, 4-di-tert-butylphenyl)pentaerythritol diphosphite are especially preferred, as well as mixtures of phosphites containing at least one of the foregoing phosphites, and the like.

Non-limiting examples of processing aids that can be used include Doverlube® FL-599 (available from Dover Chemical Corporation), Polyoxyter® (available from Polychem Alloy Inc.), Glycolube™ P (available from Lonza Chemical Company), pentaerythritol tetrastearate, Metablen A-3000 (available from Mitsubishi Rayon), neopentyl glycol dibenzoate, and the like.

Non-limiting examples of UV stabilizers that can be used include 2-(2'-Hydroxyphenyl)-benzotriazoles, e.g., the 5'-methyl-; 3',5'-di- tert.-butyl-; 5'-tert.-butyl; 5'-(1,1,3,3-tetramethylbutyl)-; 5-chloro- 3',5'-di-tert.-butyl-; 5-chloro-3'-tert.-butyl-'5'-methyl-; 3'-sec.-butyl- 5'-tert.-butyl-; 3'-alpha -methylbenzyl -5'-methyl; 3'- alpha-methylbenzyl-5'-methyl-5-chloro-; 4'-hydroxy-; 4'-methoxy-; 4'-octoxy-; 3',5'-di-tert.-amyl-; 3'-methyl-5'-carbomethoxyethyl-; 5-chloro-3',5'- di-tert.-amyl-derivatives; and Tinuvin® 234 (available from Ciba Specialty Chemicals). Also suitable are the 2, 4-bis-(2'-hydroxyphenyl)-6-alkyl-s-triazines, e.g., the 6-ethyl-; 6- heptadecyl- or 6-undecyl-derivatives; 2-Hydroxybenzophenones e.g., the 4-hydroxy-; 4-methoxy-; 4-octoxy-; 4- decyloxy-; 4-dodecyloxy-; 4-benzyloxy-; 4,2',4'-trihydroxy-; 2,2',4,4'-tetrahydroxy- or 2'-hydroxy-4,4'-dimethoxy-derivatives; 1,3-bis-(2'-Hydroxybenzoyl)-benzenes, e.g., 1,3-bis-(2'-hydroxy-4'- hexyloxy-benzoyl)-benzene; 1,3-bis-(2'-hydroxy-4'-octyloxy-benzoyl)- benzene or 1,3-bis-(2'-hydroxy-4'-dodecyloxybenzoyl)-benzene may also be employed. Esters of optionally substituted benzoic acids, e.g., phenylsalicylate; octylphenylsalicylate; dibenzoylresorcin; bis-(4-tert.-butylbenzoyl)-resorcin; benzoylresorcin; 3,5-di-tert.-butyl-4-hydroxybenzoic acid-2,4- di-tert.-butylphenyl ester or -octadecyl ester or -2-methyl-4,6-di-tert.- butyl ester may likewise be employed. Acrylates, e.g., alpha -cyano- beta, beta -diphenylacrylic acid-ethyl ester or isooctyl ester, alpha -carbomethoxy-cinnamic acid methyl ester, alpha-cyano-beta-methyl-p-methoxy-cinnamic acid methyl ester or -butyl ester or N-(beta-carbomethoxyvinyl)-2-methyl-indoline may likewise be employed. Oxalic acid diamides, e.g., 4,4'-di-octyloxy-oxanilide; 2,2'-di- octyloxy-5,5'-di-tert.-butyl-oxanilide; 2,2'-di-dodecyloxy-5,5-di-tert.- butyl-oxanilide; 2-ethoxy-2'-ethyl-oxanilide; N,N'-bis-(3-dimethyl- aminopropyl)-oxalamide; 2-ethoxy-5-tert.-butyl-2'-ethyloxanilide and the mixture thereof with 2-ethoxy-2'-ethyl-5,4'-di-tert.-butyl-oxanilide; or mixtures of ortho- and para-methoxy- as well as of o- and p-ethoxy-disubstituted oxanilides are also suitable as UV stabilizers. Particularly useful examples of ultraviolet light absorbers that may be used in the instant compositions are 2-(2-hydroxy-5-methylphenyl)-2H-benzotriazole; 2-(2- hydroxy-3,5-di-tert-amylphenyl)-2H-benzotriazole; 2-[2-hydroxy-3,5-di- (alpha,alphadimethylbenzyl)phenyl]-2H-benzotriazole; 2-(2-hydroxy-5-tert- octylphenyl)-2H-benzotriazole; 2-hydroxy-4-octyloxybenzophenone; nickel bis(O-ethyl 3,5-di-tert-butyl-4-hydroxybenzylphosphonate); 2,4- dihydroxybenzophenone; 2-(2-hydroxy-3-tert-butyl-5-methylphenyl)-2H- benzotriazole; nickel butylamine complex with 2,2'-thiobis(4-tert- butylphenol); 2-ethoxy-2'-ethyloxanilide; 2-ethoxy-2'-ethyl-5,5'-ditert-butyloxanilide or combinations comprising at least one of the foregoing UV stabilizers.

Suitable flame retardant that may be added may be organic compounds that include phosphorus, bromine, and/or chlorine. Non-brominated and non-chlorinated phosphorus-containing flame retardants may be preferred in certain applications for regulatory reasons, for example organic phosphates and organic compounds containing phosphorus-nitrogen bonds.

One type of exemplary organic phosphate is an aromatic phosphate of the formula (GO)₃P=O, wherein each G is independently an alkyl, cycloalkyl, aryl, alkylaryl, or arylalkyl group, provided that at least one G is an aromatic group. Two of the G groups may be joined together to provide a cyclic group, for example, diphenyl pentaerythritol diphosphate. Other suitable aromatic phosphates may be, for example, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formulas below: 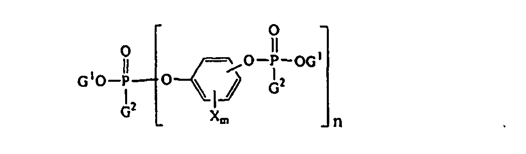 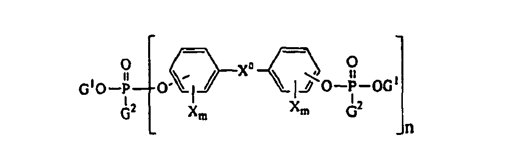 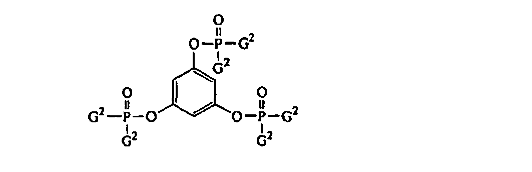 wherein each G¹ is independently a hydrocarbon having 1 to 30 carbon atoms; each G² is independently a hydrocarbon or hydrocarbonoxy having 1 to 30 carbon atoms; each X^{a} is independently a hydrocarbon having 1 to 30 carbon atoms; each X is independently a bromine or chlorine; m is 0 to 4, and n is 1 to 30. Examples of suitable di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A, respectively, their oligomeric and polymeric counterparts, and the like.

Exemplary suitable flame retardant compounds containing phosphorus-nitrogen bonds include phosphonitrilic chloride, phosphorus ester amides, phosphoric acid amides, phosphonic acid amides, phosphinic acid amides, tris(aziridinyl) phosphine oxide: When present, phosphorus-containing flame retardants can be present in amounts of 0.1 to 10 percent by weight, based on the total weight of the polycarbonate and aromatic sulfonate compound.

Halogenated materials may also be used as flame retardants, for example halogenated compounds and resins of structure (4): 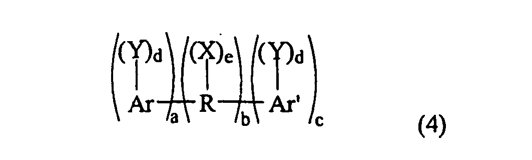 wherein R is an alkylene, alkylidene or cycloaliphatic linkage, e.g., methylene, ethylene, propylene, isopropylene, isopropylidene, butylene, isobutylene, amylene, cyclohexylene, cyclopentylidene, or the like; or an oxygen ether, carbonyl, amine, or a sulfur containing linkage, e.g., sulfide, sulfoxide, sulfone, or the like. R can also consist of two or more alkylene or alkylidene linkages connected by such groups as aromatic, amino, ether, carbonyl, sulfide, sulfoxide, sulfone, or the like.

Ar and Ar' in formula (4) are each independently mono- or polycarbocyclic aromatic groups such as phenylene, biphenylene, terphenylene, naphthylene, or the like.

Y is an organic, inorganic, or organometallic radical, for example: halogen, e.g., chlorine, bromine, iodine, fluorine; ether groups of the general formula OE, wherein E is a monovalent hydrocarbon radical similar to X; monovalent hydrocarbon groups of the type represented by R; or other substituents, e.g., nitro, cyano, and the like, said substituents being essentially inert provided that there is at least one and preferably two halogen atoms per aryl nucleus.

When present, each X is independently a monovalent hydrocarbon group, for example an alkyl group such as methyl, ethyl, propyl, isopropyl, butyl, decyl, or the like; an aryl groups such as phenyl, naphthyl, biphenyl, xylyl, tolyl, or the like; and arylalkyl group such as benzyl, ethylphenyl, or the like; a cycloaliphatic group such as cyclopentyl, cyclohexyl, or the like. The monovalent hydrocarbon group may itself contain inert substituents.

Each d is independently 1 to a maximum equivalent to the number of replaceable hydrogens substituted on the aromatic rings comprising Ar or Ar'. Each e is independently 0 to a maximum equivalent to the number of replaceable hydrogens on R. Each a, b, and c is independently a whole number, including 0. When b is not 0, neither a nor c may be 0. Otherwise either a or c, but not both, may be 0. Where b is 0, the aromatic groups are joined by a direct carbon-carbon bond.

The hydroxyl and Y substituents on the aromatic groups, Ar and Ar', can be varied in the ortho, meta or para positions on the aromatic rings and the groups can be in any possible geometric relationship with respect to one another.

Included within the scope of the above formula are bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; 2,2-bis-(2,6-dichlorophenyl)-pentane; 2,2-bis-(3,5-dibromophenyl)-hexane; bis-(4-chlorophenyl)-phenyl-methane; bis-(3,5-dichlorophenyl)-cyclohexylmethane; bis-(3-nitro-4-bromophenyl)-methane; bis-(4-hydroxy-2,6-dichloro-3-methoxyphenyl)-methane; and 2,2-bis-(3,5-dichloro-4-hydroxyphenyl)-propane 2,2 bis-(3-bromo-4-hydroxyphenyl)-propane. Also included within the above structural formula are: 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, and the like.

Also useful are oligomeric and polymeric halogenated aromatic compounds, such as a copolycarbonate of bisphenol A and tetrabromobisphenol A and a carbonate precursor, such as phosgene. Metal synergists, such as antimony oxide, may also be used with the flame retardant. When present, halogen containing flame retardants can be present in amounts of 0.1 to 10 percent by weight, based on the total weight of the polycarbonate and aromatic sulfonate compound.

The flame retardants are C₂₋₁₆ perfluoro alkyl sulfonate salts such as potassium perfluorobutane sulfonate (also known as potassium perfluorobutyl sulfonate or Rimar salt), potassium perfluoroctane sulfonate, tetraethylammonium perfluorohexane sulfonate, and potassium diphenylsulfone sulfonate.

The flame retardant salts can be present in amounts of 0.1 to 5 percent by weight, based on the total weight of the polycarbonate and aromatic sulfonate compound.

Non-limiting examples of fire retardants that may be particularly useful in the composition include potassium nonafluorobutylsulfonate, potassium diphenylsulfone sulfonate, potassium perfluorobutane sulfonate (Rimar salt), and phosphite esters of polyhydric phenols, such as resorcinol and bisphenol A.

Anti-drip agents may also be used, for example a fibril forming or non-fibril forming fluoropolymer such as polytetrafluoroethylene (PTFE). The anti-drip agent may be encapsulated by a rigid copolymer as described above, for example styrene-acrylonitrile copolymer (SAN). PTFE encapsulated in SAN is known as TSAN. Encapsulated fluoropolymers may be made by polymerizing the encapsulating polymer in the presence of the fluoropolymer, for example an aqueous dispersion. TSAN may provide significant advantages over PTFE, in that TSAN may be more readily dispersed in the composition. A suitable TSAN may comprise, for example, 50 wt.% PTFE and 50 wt.% SAN, based on the total weight of the encapsulated fluoropolymer. The SAN may comprise, for example, 75 wt.% styrene and 25 wt.% acrylonitrile based on the total weight of the copolymer. Alternatively, the fluoropolymer may be pre-blended in some manner with a second polymer, such as for, example, an aromatic polycarbonate resin or SAN to form an agglomerated material for use as an anti-drip agent. Either method may be used to produce an encapsulated fluoropolymer. Antidrip agents can be used in amounts of 0.1 to 5 percent by weight, based on the total weight of the polycarbonate and aromatic sulfonate compound.

Non-limiting examples of mold release compositions include esters of long-chain aliphatic acids and alcohols such as pentaerythritol, guerbet alcohols, long-chain ketones, siloxanes, alpha-olefin polymers, long-chain alkanes and hydrocarbons having 15 to 600 carbon atoms.

To prepare the resin compositions of the invention, the components may be mixed by any known methods which include dry mixing all or part of the ingredients of the composition in a tumbler mixer or a ribbon blender or a Henschel™ mixer and then feeding the mixture together with the remaining ingredients into an extruder or feeding ingredients of the composition downstream in the extruder after the polymer melts to form pellets. Suitable extruders types are twin screw or single screw for the various addition methods. Another alternative embodiment is to form a concentrate of pellets comprising some or all of the ingredients dispersed in the matrix wherein some or all the ingredients are at a higher concentration than the finished pellets. The concentrates are then fed into the feed section of a single or twin screw extruder together to form finished pellets. Alternatively the concentrated pellets can be added downstream from the feed section into the molten polymer.

Molded articles can be formed from the compositions of the invention using any forming method known to one skilled in the art which include but are not limited to injection molding, thermoforming, sheet or film extrusion, calendaring, and compression molding.

The polycarbonates of the present invention are generally transparent polycarbonate materials with glass transition temperatures of about 150°C, and are ductile at room temperature. The surfaces of molded plaques of polycarbonate resins with fluoroalkylene carbonate end-groups are thought to show significantly lower surface polarity compared with polycarbonate resins with non-fluorinated carbonate end-groups. For example, the water contact angles from molded plaques of a polycarbonate with end-groups formed from 2,2,2-trifluoroethanol showed an average water contact angle of 95.50, while the polycarbonate with end-groups formed from p-cumylphenol showed a contact angle of only 80° (Table 1). Higher water contact angles are thought to indicate a higher tendency to repel water. Resins having fluoroalkylene carbonate end-groups also showed lower coefficients of friction than polycarbonate resins having non-fluorinated carbonate end groups (Table 1).

It was also found that the type of molding surface used could control the water contact angles of the surfaces of polycarbonate resin having fluoroalkylene carbonate end-groups. For example the water contact angle of compression molded films varied from 81° to 102° depending on whether the molding surface employed was aluminum foil or polished steel.

X-ray photoelectron spectrometry (hereinafter "XPS") measurements confirmed that the fluorinated end-groups are found preferentially at the lowest surface energy interface when attached to the polycarbonate end-groups. XPS measurement at 2 nm showed 2.7 times more fluorine than at 9 nm (Table 2). Diluting the content of fluorine end-groups by 50% through blending with a polycarbonate resin having p-cumylphenol carbonate end-groups surprisingly only decreased the fluorine content by 18%, confirming the strong tendency of fluorinated end-goups to preferentially locate at the surface of a molded article or film compared with non-fluorinated end-groups. Highly surface-active polycarbonate resins of the type achieved through fluorinated alkylene end-groups could be very useful in a variety of applications where non-polar surfaces are very important such as in medical, low-friction parts, automotive lenses, and electro-photographic photoreceptions.

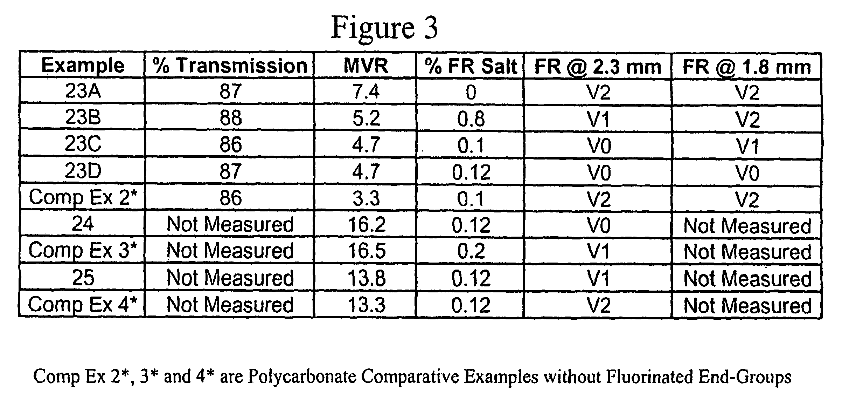

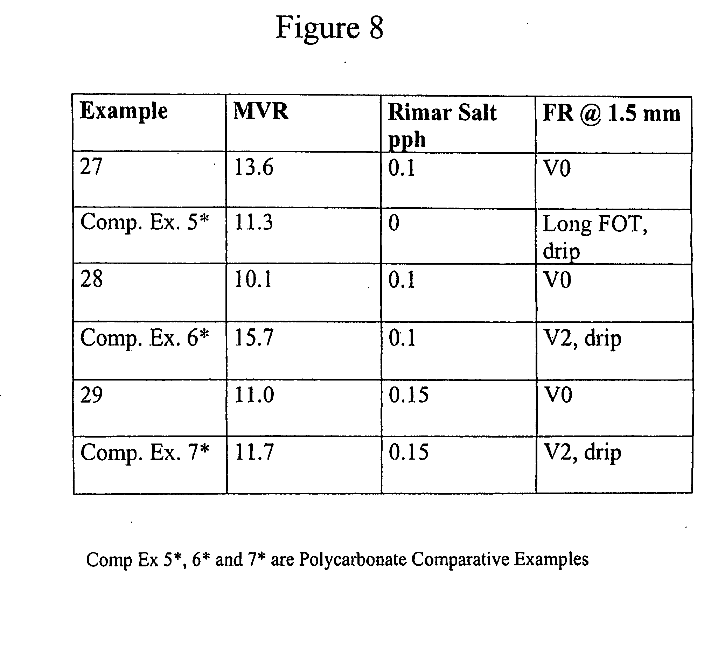

The polycarbonate resins with fluoroalkylene carbonate end-groups of the present invention were also found to be useful to achieve improved FR performance of articles having thin walls while retaining high transparency. These results are summarized in Figure 3 in which the flame retardant used was potassium perfluorobutylsulfonate. The polycarbonate resins having fluoroalkylene carbonate end-groups consistently out-performed the polycarbonate resins having p-cumylphenol carbonate end-groups at plaque thicknesses of 2.3 and 1.8 mm. Using Rimar salt as the FR agent, the polycarbonate resins having fluoroalkylene carbonate end-groups consistently out-performed the polycarbonate resins having p-cumylphenol carbonate end-groups at plaque thicknesses of 1.5 mm (see Figure 8).

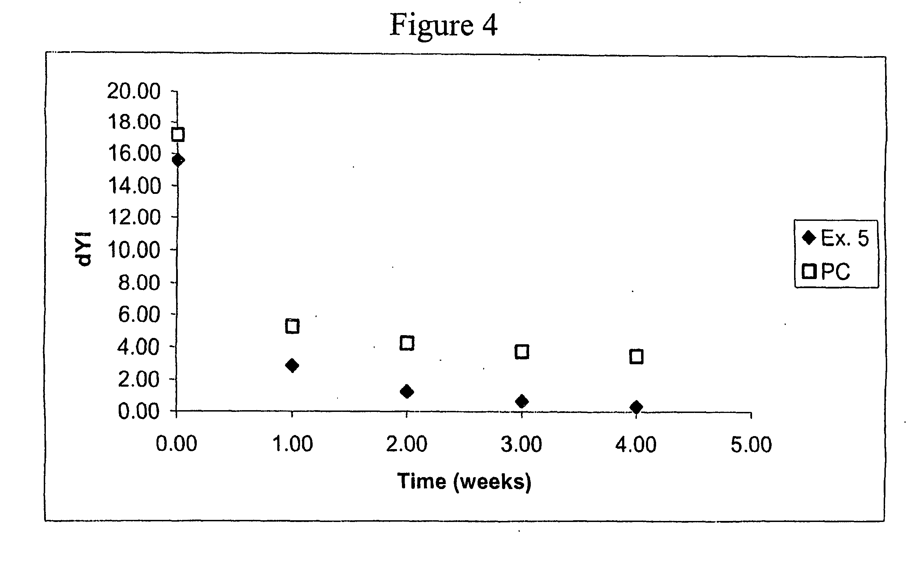

The polycarbonate resins with fluorinated end-groups of the present invention were also found to be potentially useful in medical articles that are sterilized by exposure to ionizing radiation such as gamma or e-beam irradiation. A comparison of molded plaques formed from a polycarbonate resin having carbonate end-groups made from p-cumylphenol and a polycarbonate resin having end-groups made from trifluoroethanol showed that the trifluoroethanol carbonate end-capped polycarbonate resin plaques consistently performed better in both the initial yellowness increase and the long term change in yellowness after gamma irradiation exposure (Figure 4).

Many molded polycarbonates, after sterilization, find utility in medical articles that are in contact with blood. Therefore it was important to determine if the fluorinated end-caps affected the blood exposure performance of polycarbonate resins. Circular tubes, with inner diameters of 1.5 mm and outside diameters of 1.75 mm, were extruded from a fluorinated alkylene-end capped polycarbonate of the present invention. The tubes were then filled with platelet-rich plasma to determine whether the fluorinated end groups affected the platelet retention performance of polycarbonate. Results showed that the fluorinated end-cap polycarbonate resins were at least as effective as standard p-cumylphenol end-capped resins in blood compatibility performance.

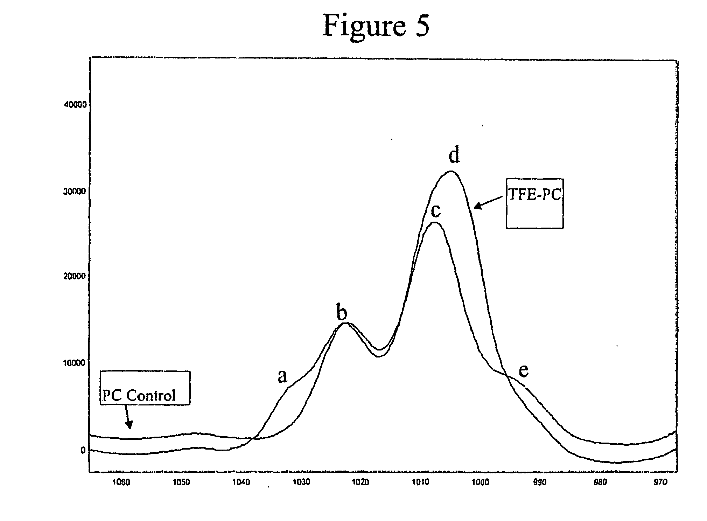

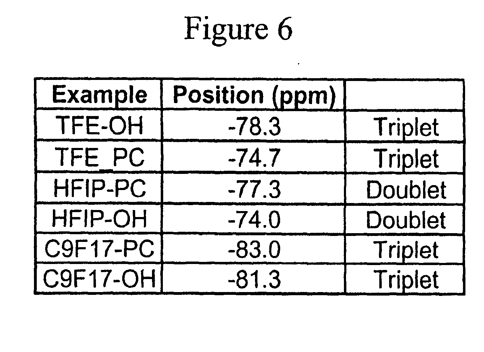

Authenticating that a particular article was made utilizing a certain secure process or molded by certain certified molders or used only by certain certified end-users is a growing priority for a variety of industries where piracy and safety are critical factors. Examples of these industries include audio and video media content providers and pharmaceutical and medical article providers. These providers are seeking means of clearly identifying an authentic and secure product through use of tagged resins, which are provided by a secure and single source. The fluoroalkylene carbonate end-groups of the present invention provide a possible approach to authentication as tagging resins because the fluorine atoms of the fluoroalkylene carbonate end-groups polycarbonates could readily be detected using several simple and readily available detection methods that would not work with polycarbonate resins that did not have any fluorine atoms or different fluorine atoms present. To demonstrate the feasibility of detecting the fluorinated end-groups using simple detection devices, polycarbonate resins having fluoroalkylene carbonate end-groups were compared with polycarbonate resins without fluoroalkylene carbonate end-groups using Raman spectroscopy and ¹⁹F NMR detection systems (Figures 5 and 6). With both detection methods unique features of the fluoroalkylene carbonate-containing polycarbonate resins were observed that could readily distinguish them from polycarbonate resins without fluoroalkylene carbonate end-groups. The fluorine detection systems could also readily distinguish the fluoro alkylene carbonate end groups different polymers from other small molecule that contain fluorine.

The authentication system based on fluorinated end-group containing polycarbonate resins could involve more than one layer of authentication, thus increasing the extent of security of the system. Other layers of security could include using combinations of one or more secure colorants or additives in combination with the fluorinated alkylene end-capped polycarbonate resins. Possible detection systems could include, but not limited to, combinations of visual color changes on exposure to ultraviolet or infra-red or heat or laser light, visual, mechanical or electrical inspection of the part using a variety of detection systems to detect certain secure additives or particle embossments or imbedded data signals in combination with detecting the fluorinated end-caps of the polycarbonate resin system.

### EXAMPLES

The following examples are set forth to provide those of ordinary skill in the art with a detailed description of how the compositions, methods, articles and uses claimed herein are evaluated, and are not intended to limit the scope of what the inventors regard as their invention. Unless indicated otherwise, parts are by weight, temperature is in °C.

Molecular weights are reported as number average (Mₙ) or weight average (M_{w}) molecular weight and were determined by gel permeation chromatography (GPC) analysis, using polycarbonate molecular weight or polystyrene standards to construct a standard calibration curve against which polymer molecular weights were determined. The temperature of the gel permeation columns was about 25°C and the mobile phase was chloroform or methylene chloride.

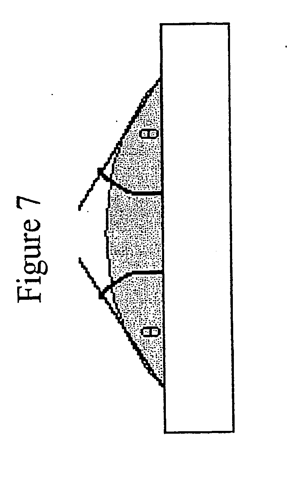

Contact angle measurements were carried out on a Krüss Drop Shape Analysis System type DSA 10 Mk2. A droplet of 1.5 µl deionized water is automatically placed on the sample. The droplet was monitored every 0.2 seconds for a period of 10 seconds by a CCD-camera and analyzed by Drop Shape Analysis software (DSA version 1.7, Krüss). The complete profile of the droplet was fitted by the tangent method to a general conic section equation. The angles were determined both at the right and left side (see Figure 7). An average value is calculated for each drop and a total of five drops per sample are measured. The average of the five drops is taken the contact angle.

Raman spectra were obtained on molded sample plaques using a Kaiser Holoprobe Spectrometer equipped with a near infrared laser diode (785 nm).

XPS measurements were carried out on molded sample plaques using a Quantum 2000 Scanning XPS Microprobe. Typical analysis area was 1200 micron by 1200 micron to 30 micron by 30 micron. Angular resolved XPS was performed for depth profiling at depths between 2 micron and 10 micron.

Haze measurements were obtained on molded sample plaques with thicknesses of 3.2 millimeters using a calibrated Gretag MacBeth 7000A instrument according to the ASTM D1003 method.

Coefficient of friction measurements were obtained by measuring the force required to move a molded sample plaque with a surface area of 2990 mm² carrying a load of 2.26 Newtons across a polished steel surface at a speed of 50 mm/minute. The nominal stress was 755 Pascals.

¹⁹F NMR measurements were obtained using 30-40 mg. of resin powder, extruded pellets or samples of molded plaques, which were dissolved in ∼1.5 mL of deuterated chloroform. All samples were run on a 400 MHz Varian Mercury NMR instrument, with a spectral window of 56.5 MHz, an acquisition time of 1 second, and a pulse delay of 10 seconds. The data is apodized using 3.5 Hz Lorentzian line broadening and then phase corrected. A 10^{th} order polynomial baseline correction routine was usually used.

Flammability tests were performed following the procedure of Underwriter's Laboratory Bulletin 94 entitled "Tests for Flammability of Plastic Materials, UL94". Several ratings can be applied based on the rate of burning, time to extinguish, ability to resist dripping, and whether or not drips are burning. According to this procedure, materials may be classified as HB, V0, UL94 V1, V2, 5VA and/or 5VB on the basis of the test results obtained for five samples. The criteria for the flammability classifications or "flame resistance" tested for these compositions are described below.

V0: In a sample placed so that its long axis is 180 degrees to the flame, the average period of flaming and/or smoldering after removing the igniting flame does not exceed five seconds and none of the vertically placed samples produces drips of burning particles that ignite absorbent cotton. Five bar flame out time (FOT) is the sum of the flame out time for five bars, each lit twice for a maximum flame out time of 50 seconds.

V1: In a sample placed so that its long axis is 180 degrees to the flame, the average period of flaming and/or smoldering after removing the igniting flame does not exceed twenty-five seconds and none of the vertically placed samples produces drips of burning particles that ignite absorbent cotton. Five bar flame out time is the sum of the flame out time for five bars, each lit twice for a maximum flame out time of 250 seconds.

Example 1: The following were added into a 500 mL 5-necked glass reactor: (a) BPA (25 g, 0.11 mol); (b) C₉F₁₇-OH (4.0 g, 0.0089 mol); (c) triethylamine (0.23 mL, 0.0016 mol); (d) methylene chloride (145 mL); and (e) de-ionized water (144 mL). The mixture was charged with phosgene (13.6 g, 0.75 g/min, 0.14 mol). During the addition of phosgene, base (25 wt.% NaOH in deionized water) was simultaneously charged to the reactor to maintain the pH of the reaction between 9 and 11. After the complete addition of phosgene, the reaction was purged with nitrogen gas, and the organic layer was extracted. The organic extract was washed once with dilute hydrochloric acid (HCl), and subsequently washed with de-ionized water three times. The organic layer was separated and precipitated into vigorously stirred hot water. The polymer was dried in an oven at 110°C before analysis. ¹⁹F and ¹H NMR confirmed quantitative conversion of C₉F₁₇-OH into C₉F₁₇-carbonate polymer chain end groups. Surface analysis by XPS confirmed existence of fluorine on the surface, and an enhancement of fluorine at the surface compared to the bulk. The M_{w} of the polymer was 20,200 g/mol (calculated by polycarbonate universal calibration curve), and the T_{g} = 137°C.

Example 2: The following were added into a 500 mL 5-necked glass reactor: (a) BPA (25 g, 0.11 mol); (b) TFE-OH (0.9 g, 0.009 mol); (c) triethylamine (0.23 mL, 0.0016 mol); (d) methylene chloride (210 mL); and (e) de-ionized water (140 mL). The mixture was charged with phosgene (13.6 g, 0.75 g/min, 0.14 mol). During the addition of phosgene, base (25 wt.% NaOH in deionized water) was simultaneously charged to the reactor to maintain the pH of the reaction between 9 and 11. After the complete addition of phosgene, the reaction was purged with nitrogen gas, and the organic layer was extracted. The organic extract was washed once with dilute hydrochloric acid (HCl), and subsequently washed with de-ionized water three times. The organic layer was separated and precipitated into vigorously stirred hot water. The polymer was dried in an oven at 110°C before analysis. ³¹P NMR proved the existence of a poly(bisphenol A carbonate) with > 97% TFE-carbonate polymer chain end groups. Surface analysis by X-ray photoacoustic spectroscopy (XPS) confirmed existence of fluorine on the surface, and an enhancement of fluorine at the surface compared to the bulk. The M_{w} of the polymer was 30,400 g/mol (calculated by polycarbonate universal calibration curve), and the T_{g} = 153°C.

Example 3: The following were added into a 500 mL 5-necked glass reactor: (a) 4,4-bis-(hydroxyphenyl)-2,2-propane (BPA) (24.97 g, 0.11 mol); (b) p-cumylphenol (PCP) (0.58 g, 0.0027 mol); (c) 2,2,3,3,4,4,5,5,6,6,7,7,8,8,9,9,9-heptadecafluoro-1-nonanol (C9F17-OH) (0.50 g, 0.0011 mol); (d) triethylamine (0.23 mL, 0.0016 mol); (e) methylene chloride (145 mL); and (f) de-ionized water (140 mL). The mixture was charged with phosgene (13.18 g, 0.75 g/min, 0.133 mol). During the addition of phosgene, base (25 wt.% NaOH in deionized water) was simultaneously charged to the reactor to maintain the pH of the reaction between 9 and 10.5. After the complete addition of phosgene, the reaction was purged with nitrogen gas, and the organic layer was extracted. The organic extract was washed once with dilute hydrochloric acid (HCl), and subsequently washed with de-ionized water three times. The organic layer was separated and precipitated into vigorously stirred hot water. The polymer was dried in an oven at 110°C before analysis. ¹⁹F and ¹H NMR confirmed quantitative conversion of C₉F₁₇-OH into C₉F₁₇-carbonate polymer chain end groups, and the existence of PCP-carbonate polymer chain end-goups. Surface analysis by XPS confirmed existence of fluorine on the surface, and an enhancement of fluorine at the surface compared to the bulk. The M_{w} of the polymer was 20,300 g/mol (calculated by polycarbonate universal calibration curve), and the Tg = 144°C.

Example 4: The following were added into a 500 mL 5-necked glass reactor: (a) BPA (24.97 g, 0.11 mol); (b) PCP (0.23 g, 0.0011 mol); (c) 2,2,2-trifluoroethanol (TFE-OH) (0.55 g, 0.0055 mol); (d) triethylamine (0.3 mL, 0.0021 mol); (e) methylene chloride (141 mL); and (f) de-ionized water (151 mL). The mixture was charged with phosgene (13.07 g, 0.75 g/min, 0.132 mol). During the addition of phosgene, base (25 wt.% NaOH in deionized water) was simultaneously charged to the reactor to maintain the pH of the reaction between 9 and 10.5. After the complete addition of phosgene, the reaction was purged with nitrogen gas, and the organic layer was extracted. The organic layer was washed once with dilute hydrochloric acid (HCl), and subsequently washed with de-ionized water three times. The organic layer was separated and precipitated into vigorously stirred hot water. The polymer was dried in an oven at 110°C before analysis. ¹⁹F and ¹H NMR confirmed quantitative conversion of TFE-OH into TFE-carbonate polymer chain end groups, and the existence of PCP-carbonate polymer chain end-groups. Surface analysis by XPS confirmed existence of fluorine on the surface, and an enhancement of fluorine at the surface compared to the bulk. The M_{w} of the polymer was 28,000 g/mol (calculated by polycarbonate universal calibration curve), and the T_{g} = 149°C.

Example 5: The following were added into a 30 L 5-necked glass reactor: (a) BPA (2250 g, 9.87 mol); (b) TFE-OH (49.34 g, 0.49 mol); (c) triethylamine (20.63 mL, 0.20 mol); (d) methylene chloride (15 kg); and (e) de-ionized water (7.1 kg). The mixture was charged with phosgene (750 g, 20-30 g/min, 7.58 mol). During the addition of phosgene, base (50 wt.% NaOH in deionized water) was simultaneously charged to the reactor to maintain the pH of the reaction between 8 and 11. After addition of 750 g of phosgene, the pH was raised to 12, and phosgene was charged to the flask again (375 g, 3.79 mol). Then, the pH lowered and maintained at 8 and 11 for the last charge of phosgene (375 g, 3.79 mol). After the complete addition of phosgene, the reaction was purged with nitrogen gas, and the organic layer was extracted. The organic extract was washed once with dilute hydrochloric acid (HCl), and subsequently washed with de-ionized water three times. The organic layer was separated and precipitated into methanol. The polymer was dried in an oven at 110°C before analysis. ³¹P NMR proved the existence of a poly(bisphenol A carbonate) with > 97% TFE-carbonate polymer chain end groups. Surface analysis by XPS confirmed existence of fluorine on the surface, and an enhancement of fluorine at the surface compared to the bulk. The M_{w} of the polymer was 29,900 g/mol (calculated by polycarbonate universal calibration curve). The TFE-PC was extruded on a single screw extruder and injection-molded into 1/8"-thick color plaques. The TFE-PC color plaques were transparent (88% transmission, haze = 1.1) and displayed a water contact angle = 95 degrees.

Example 6: Into a 1 L Morton flask was charged: (A) BPA (22.8 g, 100 mmol); (B) methylene chloride (100 mL); (C) distilled water (100 mL); (D) HFIP (0.84 g, 5 mol% compared to BPA); and (E) triethylamine (200µL, 1.43 mmol. The flask was equipped with a calibrated pH probe, mechanical stirrer, condenser, 25% NaOH (by weight) inlet, and tube inlet. With stirring, the pH was initially adjusted to 10.5 and controlled throughout the reaction by pumping in base solution, keeping the pH near 10.5. Phosgene was introduced at 0.75 g/min, for 16 minutes (12 g phosgene total, 122.4 mmol). During this process, 25% NaOH was continuously added to maintain the reaction pH around 10.5. A final pH of 9.7 was established. The polymer solution was separated from the brine, washed with aqueous HCl, washed with water, precipitated into hot water, and dried. M_{w} = 35,700 (Polystyrene standards). Proton NMR indicated that complete conversion of the HFIP-OH into 1,1,1,3,3,3-hexafluoro-2-propylcarbonate end group was obtained.

Example 7: Into a 1 L Morton flask was charged (A) BPA (22.8 g, 100 mmol); (B) methylene chloride (100 mL); (C) distilled water (100 mL); and (D) Triethylamine (200µL, 1.43 mmol). The flask was equipped with a calibrated pH probe, mechanical stirrer, condenser, 25% NaOH (by weight) inlet, and tube inlet. With stirring, the pH was initially adjusted to 10.5 and controlled throughout the reaction by pumping in base solution, keeping the pH near 10.5. Phosgene was introduced at 0.75 g/min for 8 min. (6.0 g, 60mmol). Separately, a 5% by weight stock solution of 2,2,2-trifluoroethanol (TFE) (7.89 g, 78.9 mmol) in methylene chloride (150 g) was made and, just prior to reacting, triethylamine (11.0 mL, 78.9 mmol) was added to this stock solution. The chloroformate of TFE was then prepared by pumping the stock solution (0.5 g TFE total, 5 mol% based on bisphenol-A) through a tubular reactor at a rate of 20.0 g/min. for 0.5 minutes and adding phosgene at a rate of 2.0 g/min (4/1 mole ratio of phosgene per TFE). Each reagent was added in the first section of tubing and pumped through four additional mixing sections before reaching the batch reactor containing the reactants (A)-(D). After 0.5 minutes of charging chloroformate to the Morton flask, the flow of the TFE stock solution was discontinued and the phosgene flow lowered to 0.75 g/min. for 8 minutes (12 g phosgene total, 122.4 mmol). During this process, 25% NaOH was continuously added to maintain the reaction pH around 10.5. The polymer solution was separated from the brine, washed with aqueous HCl, washed with water, precipitated into vigorously-stirred hot water, and dried. M_{w} = 28,800 g/mol (Polystyrene standards). Proton NMR indicated that complete incorporation of the TFE to 2,2,2-trifluoroethylcarbonate end groups. A compression molded film exhibited a contact angle with water of 102.0°.

Example 8: Into a 1 L Morton flask was charged (A) BPA (22.8 g, 100 mmol) ; (B) methylene chloride (100 mL); and (C) distilled water (100 mL). The flask was equipped with a calibrated pH probe, mechanical stirrer, condenser, 25% NaOH (by weight) inlet, and tube inlet. With stirring, the pH was initially adjusted to 10.5 and controlled throughout the reaction by pumping in base solution, keeping the pH near 10.5. In a separate flask, a 2% by weight stock solution of 1,1,1,3,3,3-hexafluoro-2-propanol (HFIP) (3.1 g, 18.4 mmol) in 150 g of methylene chloride was prepared, and just prior to reacting, triethylamine (2.53 mL, 18.4 mmol) was added to this stock solution. The chloroformate of HFIP (0.84 g HFIP total, 5 mol% based on BPA) was prepared by pumping the stock solution through a tube at a rate of 20.0 g/min for 2.1 minutes and adding phosgene at a rate of 0.93 g/min (4/1 mole ratio of phosgene per HFIP). Each reagent was added in the first section of tubing and pumped through four additional mixing sections before being pumped into the batch reactor containing (A-C). After 2.1 minutes of charging chloroformate to the Morton flask, the flow of the HFIP stock solution was discontinued and the phosgene flow lowered to 0.75 g/min. for 16 minutes (12 g phosgene total, 122.4 mmol). During this process, 25% NaOH was continuously added to maintain the reaction pH around 10.5. A final pH of 9.6 was established, requiring 47.5 g of base solution. The polymer solution was separated from the brine, washed with aqueous HCl, washed with water, precipitated into hot water, and dried. M_{w} = 34,700 (Polystyrene standards). Proton NMR indicated complete incorporation of HFIP into the 1,1,1,3,3,3-hexafluoro-2-propylcarbonate polymer chain end group.

Example 9: Into a 1 L Morton flask was charged: (A) BPA (22.8 g, 100 mmol); (B) methylene chloride (100 mL); (C) distilled water (100 mL); (D) PCP (0.21 g, 1 mol% compared to BPA); and (E) triethylamine (100 mL, 0.77 mmol). The flask was equipped with a calibrated pH probe, mechanical stirrer, condenser, 25% NaOH (by weight) inlet, and tube inlet. With stirring, the pH was initially adjusted to 10.5 and controlled throughout the reaction by pumping in base solution, keeping the pH near 10.5. Into a separate flask, a 5 wt.% stock solution of Zonyl FSN-100 ® (Zonyl) a fluorosurfactant with the chemical structure, F(CF₂CF₂)₃₋₈-CH₂CH₂O-(CH₂CH₂O)ₓH (M_{w} = 950 g/mol) (10.5 g, 11.0 mmol) was dissolved into 200 g of methylene chloride. Just prior to reacting, triethylamine (0.77 mL, 5.5 mmol) was added to this stock solution. The chloroformate was prepared by pumping the stock solution through a tubular reactor at a rate of 16.6 g/min. for 4 minutes (3.32 g of the fluorosurfactant total, 3.5 mol% based on BPA) and adding phosgene at a rate of 0.4 g/min (over a 4/1 mole ratio of phosgene per fluorosurfactant hydroxyl group). Each reagent was added in the first section of tubing and pumped through four additional mixing sections before being pumped into the batch reactor. After four minutes of charging the chloroformate to the Morton flask, the flow of the Zonyl stock solution was discontinued and the phosgene flow raised to 0.75 g/min. for 16 minutes (12 g phosgene total, 122.4 mmol). During this process, 25% NaOH was continuously added to maintain the reaction pH around 10.5. A final pH of 9.3 was established, and the polymer solution was separated from the brine, washed with aqueous HCl, washed with water, precipitated into hot water, and dried. M_{w} = 25,100 (Polystyrene standards). Proton NMR indicated that complete incorporation of the fluorosurfactant hydroxy groups to fluorosurfactant-carbonate polymer chain end groups was obtained.

Example 10: Ex. 9 was repeated with 1 mol% Zonyl introduced as Zonyl-chloroformate through the tube, and 3.5 mol% *p*-cumylphenol as the remainder of the mono-functional chain terminating species. Proton NMR indicated complete conversion of the Zonyl hydroxyl groups to Zonyl-carbonate polymer chain end groups. M_{w} = 44,100 (Polystyrene standards). A compression-molded film exhibited a contact angle with water of 94.1°.

Example 11: The following were added into a 70 L CSTR equipped with an overhead condenser and a recirculation pump with a flow rate of 40 L/minute: (a) BPA (6500 g, 28.51 mol); (b) 2,2,3,4,4,4-hexafluorobutanol (C₄F₆-OH) (259.4 g, 1.42 mol); (c) triethylamine (59.6 mL, 0.43 mol); (d) methylene chloride (38 kg); and (e) de-ionized water (13.3 kg). The pH of the reaction mixture was adjusted to 12 by the addition of base (50% NaOH is deionized water). The mixture was charged with phosgene (3757 g, 140 g/min, 38 mol). During the addition of phosgene, base (50 wt.% NaOH in deionized water) was simultaneously charged to the reactor to maintain the pH of the reaction between 9 and 12. After the complete addition of phosgene, the reaction was purged with nitrogen gas, and the organic layer was extracted. The organic extract was washed once with dilute hydrochloric acid (HCl), and subsequently washed with de-ionized water three times. The organic layer was precipitated from methylene chloride into hot steam. The polymer was dried in an oven at 110°C before analysis. ³¹P NMR proved the existence of a poly(bisphenol A carbonate) with > 95% 2,2,3,4,4,4-hexafluorobutyl-carbonate polymer chain end groups. Surface analysis by X-ray photoacoustic spectroscopy (XPS) confirmed existence of fluorine on the surface, and an enhancement of fluorine at the surface compared to the bulk. The M_{w} of the polymer was 30,400 g/mol (calculated by polycarbonate universal calibration curve).

Example 12: The following were added into a 70L CSTR equipped with an overhead condenser and a recirculation pump with a flow rate of 40 L/minute: (a) BPA (6500 g, 28.51 mol); (b) C₄F₆-OH (320.74 g, 1.76 mol); (c) triethylamine (59.6 mL, 0.43 mol); (d) methylene chloride (38 kg); and (e) de-ionized water (13.3 kg). The pH of the reaction mixture was adjusted to 12 by the addition of base (50% NaOH is deionized water). The mixture was charged with phosgene (3757 g, 140 g/min, 38 mol). During the addition of phosgene, base (50 wt.% NaOH in deionized water) was simultaneously charged to the reactor to maintain the pH of the reaction between 11 I and 13. After the complete addition of phosgene, the reaction was purged with nitrogen gas, and the organic layer was extracted. The organic extract was washed once with dilute hydrochloric acid (HCl), and subsequently washed with de-ionized water three times. The organic layer was precipitated from methylene chloride into hot steam. The polymer was dried in an oven at 110°C before analysis. ³¹P NMR proved the existence of a poly(bisphenol A carbonate) with > 95% 2,2,3,4,4,4-hexafluorobutyl-carbonate polymer chain end groups. Surface analysis by X-ray photoacoustic spectroscopy (XPS) confirmed existence of fluorine on the surface, and an enhancement of fluorine at the surface compared to the bulk. The M_{w} of the polymer was 17,100 g/mol (calculated by polycarbonate universal calibration curve).

Example 13: The following were added into a 70L CSTR equipped with an overhead condenser and a recirculation pump with a flow rate of 40 L/minute: (a) BPA (6500 g, 28.51 mol); (b) HFIP (239.4 g, 1.42 mol); (c) triethylamine (59.6 mL, 0.43 mol); (d) methylene chloride (37.8 kg); and (e) de-ionized water (13.3 kg). The mixture was charged with phosgene (3757 g, 140 g/min, 38 mol). During the addition of phosgene, base (50 wt.% NaOH in deionized water) was simultaneously charged to the reactor to maintain the pH of the reaction between 9-11. After the complete addition of phosgene, the reaction was purged with nitrogen gas, and the organic layer was extracted. The organic extract was washed once with dilute hydrochloric acid (HCl), and subsequently washed with de-ionized water three times. The organic layer was precipitated from methylene chloride into hot steam. The polymer was dried in an oven at 110°C before analysis. ³¹P NMR proved the existence of a poly(bisphenol A carbonate) with > 95% 1,1,1,3,3,3-hexalfluoro-2-propyl-carbonate polymer chain end groups. Surface analysis by X-ray photoacoustic spectroscopy (XPS) confirmed existence of fluorine on the surface, and an enhancement of fluorine at the surface compared to the bulk. The M_{w} of the polymer was 18,000 g/mol (calculated by polycarbonate universal calibration curve).

Example 14: The following were added into a 70L CSTR equipped with an overhead condenser and a recirculation pump with a flow rate of 40 L/minute: (a) BPA (6500 g, 28.51 mol); (b) HFIP (143.7 g, 0.85 mol); (c) triethylamine (59.6 mL, 0.43 mol); (d) methylene chloride (37.2 kg); and (e) de-ionized water (13.2 kg). The mixture was charged with phosgene (3757 g, 140 g/min, 38 mol). During the addition of phosgene, base (50 wt.% NaOH in deionized water) was simultaneously charged to the reactor to maintain the pH of the reaction between 9 and 11. After the complete addition of phosgene, the reaction was purged with nitrogen gas, and the organic layer was extracted. The organic extract was washed once with dilute hydrochloric acid (HCl), and subsequently washed with de-ionized water three times. The organic layer was precipitated from methylene chloride into hot steam. The polymer was dried in an oven at 110°C before analysis. ³¹P NMR proved the existence of a poly(bisphenol A carbonate) with > 95% 1,1,1,3,3,3-hexafluoro-2-propyl-carbonate polymer chain end groups. Surface analysis by X-ray photoacoustic spectroscopy (XPS) confirmed existence of fluorine on the surface, and an enhancement of fluorine at the surface compared to the bulk. The M_{w} of the polymer was 23,600 g/mol (calculated by polycarbonate universal calibration curve).

Example 15: Into a clean, dry glass cylindrical glass polymerization reactor (30 cm in length, 3.2 cm diam.) was charged: (a) BPA (17.28 g, 0.076 mol); (b) *bis*(methylsalicyl) carbonate (BMSC) (25.0 g, 0.076 mol); (c) 2,2,3,3,4,4,5,5,6,6,7,7,8,8,9,9,10,10,10-nonadecafluoro-1-decanol (C₁₀F₁₉-OH) (2.02 g, 0.004 mol); (d) NaOH (8.0 x 10⁻⁶ g, 2.0 x 10⁻⁷ mol); and (e) tetrabutylphosphonium acetate(0.00381 g, 1.2 x 10⁻⁵ mol). The atmosphere inside the reactor was then evacuated using a vacuum source and purged with nitrogen. This cycle was repeated 3 times after which the contents of the reactor were heated to melt the monomer mixture. Then, the following temperature/pressure profile was used for the reaction: (1) 180°C, 1atm for 10min; (2) 220°C, 1atm, 15min; (3) 250°C, 100mb, 15min; (4) 260°C 3.1mb, 5 min; and (5) 270°C, 2.5mb, 5min. After allowing the reaction to proceed under these conditions, the pressure inside the reactor was brought to atmospheric pressure and the reactor was vented to relieve any excess pressure. Product isolation was accomplished by breaking the glass reactor and collecting the material M_{w} = 24,000 g/mol (PS standards); T_{g} = 138°C. ¹⁹F NMR proved the existence of a C10F19-carbonate polymer chain end-group. Fries rearrangement not detectable by NMR (<100ppm) and end-capping efficiency of fluorinated alcohol is 65.7% (PC-OH = 32.5%, and end capped MS = 1.8%).

Example 16: TFE-PC (made similar to the methods above), Mw = 33,000 g/mol, was blended with bisphenol A-polycarbonate at a ratio of 72:28 (PC:TFE-PC). A phosphite heat and various amounts of potassium perfluorobutylsulfonate FR agent were added to the blend

Example 17: TFE-PC (made similar to the methods above), Mw = 33,000 g/mol, was blended with bisphenol A-polycarbonate at a ratio of 60:40 (PC:TFE-PC). A phosphite heat-stabilizer and various amounts of potassium perfluorobutylsulfonate FR agent were added to the blend.

Example 18: The following were added into a 70L CSTR equipped with an overhead condenser and a recirculation pump with a flow rate of 40 L/minute: (a) BPA (2500 g, 10.96 mol); (b) TFE (120 g, 1.2 mol); (c) 80% tetrabutylammonium chloride in water (TBAC, 24.36 g, 0.11 mol) (d) methylene chloride (14 kg); and (e) de-ionized water (13.1 kg). The mixture was charged with phosgene (2771 g, 120 g/min, 28 mol). During the addition of phosgene, base (50 wt.% NaOH in deionized water) was simultaneously charged to the reactor to maintain the pH of the reaction between 4 and 7. After the total phosgene was delivered, the pH was raised to pH 11, 300 grams of di-eugenol-capped polydimethylsiloxane with a molecular weight of approximately 3,270 g/mol was added to the reactor, and the reaction was stirred for 15 to 20 minutes while maintaining the pH at 11 by the addition of caustic solution. A second addition of BPA (2,500 g, 10.96 mol) was added and the pH was maintained at a pH of 11. Triethylamine (42.3 g, 0.41 mol) was added and an additional 1000 grams of phosgene was delivered to the reaction flask at a rate of 120 g/min. After the total addition of phosgene, the reaction was purged with nitrogen gas, and the organic layer was extracted. The organic extract was washed once with dilute hydrochloric acid (HCl), and subsequently washed with de-ionized water three times. The organic layer was precipitated from methylene chloride into hot steam. The polymer was dried in an oven at 110°C before analysis. ³¹P NMR proved the existence of a polycarbonate-siloxane copolymer with > 95% 2,2,2-trifluoroethylcarbonate polymer chain end groups. Surface analysis by X-ray photoacoustic spectroscopy (XPS) confirmed existence of silicon and fluorine on the surface. The M_{w} of the polymer was 26,600 g/mol(calculated by polycarbonate universal calibration curve). The materials were extruded and molded using normal ASTM conditions for polycarbonate.

Example 19: The following were added into a 2L 5-necked glass reactor: (a) BPA (50 g, 0.22 mol); (b) 1,1-bis(4-hydroxy-3-methylphenyl)cyclohexane (DMBPC) (50 g, (0.19 mol) (c) C4F6-OH (3.77 g, 0.021 mol); (d) triethylamine (0.87 mL, 0.0015 mol); (e) methylene chloride (579 mL); and (f) de-ionized water (193 mL). The mixture was charged with phosgene (54.5 g, 2.0 g/min, 0.55 mol). During the addition of phosgene, base (25 wt.% NaOH in deionized water) was simultaneously charged to the reactor to maintain the pH of the reaction between 9 and 11. After the complete addition of phosgene, the reaction was purged with nitrogen gas, and the organic layer was extracted. The organic extract was washed once with dilute hydrochloric acid (HCl), and subsequently washed with de-ionized water three times. The organic layer was separated and precipitated into vigorously stirred hot water. The polymer was dried in an oven at 110°C before analysis. ³¹P NMR proved the existence of a poly(BPA-DMBPC) copolymer with > 97% TFE-carbonate polymer chain end groups. The M_{w} of the polymer was 20,100 g/mol (calculated by polycarbonate universal calibration curve).

Example 20: The following were added into a 2L 5-necked glass reactor: (a) resorcinol (35.25 g, 0.32 mol); (b) deionized water (50 mL); (c) anhydrous methylene chloride, HPLC grade (450 mL) (d) HFIP (2.75 g, 0.016 mol) (e) methyltributylammonium chloride (0.3 mL), and (f) triethylamine (1.15 g, 0.008 mol). A 33 wt.% solution of a 50:50 mixture of iso:terepthalyl chloride dissolved in anhydrous methylene chloride (150.1 g, 0.25 mol of diacid chloride) was added to the reactor over a period of 10-15 minutes via an addition funnel. The pH of the reaction was maintained between 6 and 8 by the addition of 25 wt.% NaOH in deionized water.

After the polyester condensation, the polyarylate mixture was charged with (a) BPA (37.4 g, 0.16 mol); (b) deionized water (400 mL), and (d) phosgene (20.0 g, 2.0 g/min., 0.20 mol). The pH was maintained between 10 and 12 during phosgenation by the addition of a 25 wt.% caustic solution. After the complete addition of phosgene, the organic extract was washed once with dilute hydrochloric acid (HCI), and subsequently washed with de-ionized water three times. The organic layer was separated and precipitated into vigorously stirred hot water. The polymer was dried in an oven at 110°C before analysis.

Example 21: Into a 1 L Morton flask was charged 22.8 g (99.8 mmol) bisphenol-A (BPA), 100 mL methylene chloride, 100 mL distilled water, and 200 mL (1.43 mmol) triethyl amine. The flask was equipped with a calibrated pH probe, mechanical stirrer, condenser, 25% NaOH (by weight) inlet, and tube inlet. The pH was initially adjusted to 10.5 and controlled throughout the reaction by pumping in base solution. A 2 weight percent stock solution of 2,2,2-trifluoroethanol (TFE) containing 1 eq. TEA/- OH was prepared by dissolving 3.06 g (30.6 mmol) and 4.27 mL triethyl amine (TEA, 30.6 mmol) in 150 g of methylene chloride. For the initial 8 minutes of the experiment, phosgene alone was pumped into the Morton flask at a rate of 0.75 g/min, delivering 6.0 g phosgene. At that point the phosgene flow was halted and 5.23 g of a 26.3 weight percent d-50 eugenol siloxane bischloroformate (EuSi-BCF) solution in methylene chloride was added, delivering 1.4 g of EuSi-BCF in total. Stirring continued for 5 minutes at pH 10.5 before pumping in the TFE chainstopper. TFE chloroformate was prepared using a 5 section tubular reactor and a flow rate of TFE stock solution of 12.0 g/min. Phosgene flow during TFE chloroformate production was held at 0.94 g/min (4:1 ratio of phosgene/-OH). Upon delivering 0.5 g of TFE to the reaction, the tube flow was shut off to the reactor and phosgenation resumed at a rate of 0.75 g/min until 20% excess had been delivered (∼12.5 g phosgene) based on total BPA. The reaction was purged to the scrubber with nitrogen to remove excess phosgene and then centrifuged. The methylene chloride layer was washed with aq. 1 N HCl and twice with distilled water before isolation by steam precipitation. The isolated polymer was dried in a 110°C vacuum oven overnight before analysis was performed. NMR performed in CDCl₃ confirmed 5.0 wt.% of EuSi and 2.7 mol% of TFE presenting by ¹H integration. An average water contact angle measurement of 108.5° was obtained on a clear compression molded film. Mₙ = 19,408, M_{w}= 60,285, PDI =3.11 based on polystyrene standards. T_{g} = 139.7 °C.

Example 22: The following were added into a 70L CSTR equipped with an overhead condenser and a recirculation pump with a flow rate of 40 L/minute: (a) BPA (2500 g, 10.96 mol); (b) TFE (120 g, 1.2 mol); (c) 80% tetrabutylammonium chloride in water (TBAC, 24.36 g, 0.11 mol) (d) methylene chloride (14 kg); and (e) de-ionized water (13.1 kg). The mixture was charged with phosgene (2771 g, 120 g/min, 28 mol). During the addition of phosgene, base (50 wt.% NaOH in deionized water) was simultaneously charged to the reactor to maintain the pH of the reaction between 4 and 7. After the total phosgene was delivered, the pH was raised to pH 11, 300 grams of di-eugenol-capped polydimethylsiloxane with a molecular weight of approximately 3,270 g/mol was added to the reactor, and the reaction was stirred for 15 to 20 minutes while maintaining the ph at 11 by the addition of caustic solution. A second addition of BPA (2,500 g, 10.96 mol) was added and the pH was maintained at a pH of 11. Triethylamine (42.3 g, 0.41 mol) was added and an additional 1000 grams of phosgene was delivered to the reaction flask at a rate of 120 g/min. After the total addition of phosgene, the reaction was purged with nitrogen gas, and the organic layer was extracted. The organic extract was washed once with dilute hydrochloric acid (HCI), and subsequently washed with de-ionized water three times. The organic layer was precipitated from methylene chloride into hot steam. The polymer was dried in an oven at 110°C before analysis. ³¹P NMR proved the existence of a polycarbonate-siloxane copolymer with > 95% 2,2,2-trifluoroethylcarbonate polymer chain end groups. Surface analysis by X-ray photoacoustic spectroscopy (XPS) confirmed existence of silicon and fluorine on the surface. The M_{w} of the polymer was 26,600 g/mol (calculated by polycarbonate universal calibration curve). The materials were extruded and molded using normal ASTM conditions for polycarbonate.

Example 23: TFE-PC was synthesized similar to the method described in example 14 (Mw = 35,100 g/mol). Examples 23 A,B,C, D and PC control with p-cumylphenol carbonate end-groups were extruded on a twin screw extruder with different loadings of the flame retardant (FR), potassium perfluorobutylsulfonate, and subsequently injection molded into 2.3 mm and 1.8 mm flame bars. Table 3 shows the composition and properties of the materials after extrusion and injection molding.

Example 24: TFE-PC (made similar to the methods above), Mw = 33,000 g/mol, was blended with bisphenol A-polycarbonate at a ratio of 72:28 (PC:TFE-PC). A phosphite heat and various amounts of potassium perfluorobutylsulfonate FR agent were added to the blend. FR results are listed in Table 3.

Example 25: TFE-PC (made similar to the methods above), Mw = 33,000 g/mol, was blended with bisphenol A-polycarbonate at a ratio of 60:40 (PC:TFE-PC). A phosphite heat-stabilizer and various amounts of potassium perfluorobutylsulfonate FR agent were added to the blend. FR results are listed in Table 3.

Example 26: A mixture containing 50 wt.% TFE-PC and 50 wt.% C₄F₆-PC made similar to the methods above was blended, extruded and molded into thin circular tubes with inner diameter of 1.5 mm and an outside diameter of 1.75 mm. Example 26 was immersed in platelet-rich plasma (PRP) for one hour and the platelet retention was determined. The results indicated that between 82% and 86% platelets were retained after perfusion in PRP. A polycarbonate control sample with end-groups formed from p-cumylphenol showed 84% retention.

Figure 3 displays the FR and melt flow data for Examples 23-25 and the PC control materials with the similar melt flow. All of the materials were blended, extruded, and injection molded under similar conditions. Examples 24 and 25 show good FR characteristics on injection-molded items with relatively thin gauges and higher melt flows. The blends that contain TFE-PC showed better optical properties and flame retardant properties compared to the PC control examples.

Example 27: TFE-PC was produced in a manner similar to the method of Example 2 above except in larger quantities and at a lower pH level. A potassium perfluorobutane sulfonate (Rimar salt) FR agent at a level of 0.1 weight % was added to the blend. FR results are listed in Table 8.

Example 28: A 50:50 blend of polycarbonate containing TFE-PC (made similar to the method of Example 2 above except in larger quantities) and polycarbonate having paracumyl phenol-type end groups was made. A potassium perfluorobutane sulfonate (Rimar salt) FR agent at a level of 0.1 weight % was added to the blend. FR results are listed in Table 8.

Example 29: A 70:30 blend of polycarbonate containing TFE-PC (made similar to the method of Example 2 above except in smaller quantities) and polycarbonate having paracumyl phenol-type end groups was made (TFE-PC: PCP-PC). A potassium perfluorobutane sulfonate (Rimar salt) FR agent at a level of 0.15 weight % was added to the blend. FR results are listed in Table 8.

Comparative Example 5* was a TFE-PC made in a manner similar to the method of Example 2, with no FR agent. Comparative Examples 6* and 7* are polycarbonate having paracumyl phenol-type end groups having 0.1 weight % and 0.15 weight % Rimar salt respectively. FR results are listed in Table 8. The examples with the fluoroalkylene carbonate end caps (TFE-PC or blends containing TFE-PC) and at least 0.1 weight % Rimar salt all passed UL94 testing at the V0 level at 1.5 mm thickness. The examples without the fluoroalkylene carbonate end caps and Rimar salt did not pass.

Compounds are described herein using standard nomenclature. A dash ("-") that is not between two letters or symbols is used to indicate a point of attachment for a substituent. For example, -CHO is attached through the carbon of the carbonyl (C=O) group. The endpoints of all ranges reciting the same characteristic or component are independently combinable and inclusive of the recited endpoint. All references are incorporated herein by reference. The terms "first," "second," and the like herein do not denote any order, quantity, or importance, but rather are used to distinguish one element from another.

While typical embodiments have been set forth for the purpose of illustration, the foregoing descriptions should not be deemed to be a limitation on the scope herein. Accordingly, various modifications, adaptations, and alternatives may occur to one skilled in the art without departing from the spirit and scope herein.

## Claims

1. A polycarbonate composition comprising: an aromatic polycarbonate resin having fluoroalkylene carbonate end-groups and a flame retardant additive selected from the group consisting of C₂₋₁₆ perfluoroalkyl sulfonate salts, and potassium diphenylsulfone sulfonate, wherein the fluoroalkylene carbonate end-groups comprise 90% or greater of the total end-groups of the aromatic polycarbonate resin.

2. The composition of claim 1, wherein the fluoroalkylene carbonate end-groups have structures corresponding to end-groups formed by the reaction of a fluorinated alcohol selected from the group consisting of 2,2,2-trifluoroethanol, 1,1,1,3,3,3-hexafluoro-isopropanol, 1,1,1,2,3,3,-hexafluorobutanol, heptadecafluorononanol, and F(CF₂CF₂)₃₋₈CH₂CH₂O-(CH₂CH₂O)ₓH, wherein X = 1 to 20.

3. The composition of claim 1, wherein the aromatic polycarbonate resin is a co-polycarbonate selected from the group consisting of a polyarylester-co-aromatic polycarbonate, a polyalkylester-co-aromatic polycarbonate, and a polydimethylsiloxane-co-aromatic polycarbonate block copolymer.

4. The composition of claim 3, wherein the aromatic polycarbonate resin is a polydimethylsiloxane-co-polycarbonate block copolymer having residues formed from eugenol, 2-allylphenol or 4-allylphenol.

5. The composition of claim 1 further comprising a thermoplastic polymer selected from the group consisting of an aromatic polycarbonate, a polyarylester-co-aromatic polycarbonate, a polyalkylester-co-aromatic polycarbonate, a polydimethylsiloxane-co-aromatic polycarbonate block copolymer, a polyester, and a polyimide.

6. A polycarbonate composition according to claim 1 wherein the aromatic polycarbonate resin comprises at least some aromatic carbonate end-groups that are not fluorinated.

7. A method for improving the flame retardancy of a polycarbonate resin formulation comprising combining an aromatic polycarbonate resin, said aromatic polycarbonate resin having fluoroalkylene carbonate end groups, and a flame retardant additive selected from the group consisting of C₂₋₁₆ perfluoroalkyl sulfonate salts and potassium diphenylsulfone sulfonate, wherein the fluoroalkylene carbonate end-groups comprise 90% or greater of the total end-groups of the aromatic polycarbonate resin.

8. An article comprising the composition of any of claims 1 to 6.

9. A method for making a flame retardant polycarbonate resin with fluoroalkylene carbonate end-groups, said method comprising the steps of producing a fluoroalkylene chloroformate and then adding the fluoroalkylene chloroformate to a mixture comprising an aromatic dihydroxy compound, phosgene, an organic solvent, water, an organic base, and an inorganic base, and further adding an inorganic flame retardant comprising at least one of a salt of C₂₋₁₆ perfluoroalkyl sulfonate salts or potassium diphenylsulfone sulfonate or mixtures thereof.

10. A method for making a flame retardant polycarbonate resin comprising melt condensing a mixture comprising a fluorinated alcohol, an aromatic dihydroxy aromatic compound, a diaryl carbonate in the presence of a transesterification catalyst, and further adding a flame retardant comprising at least one of a salt of C₂₋₁₆ perfluoroalkyl sulfonate salts or potassium diphenylsulfone sulfonate or mixtures thereof.

## Patentansprüche

1. Eine Polycarbonatzusammensetzung, die folgendes umfasst: ein aromatisches Polycarbonatharz, das Fluoralkylencarbonatendgruppen besitzt, und einen flammenhemmenden Zusatzstoff gewählt aus der Gruppe bestehend aus C₂₋₁₆ Perfluoralkylsulfonatsalzen, und Kaliumdiphenylsulfonsulfonat, worin die Fluoralkylencarbonatendgruppen 90% oder mehr der Gesamtendgruppen des aromatischen Polycarbonatharzes umfassen.

2. Die Zusammensetzung von Anspruch 1, worin die Fluoralkylencarbonatendgruppen Strukturen haben, die Endgruppen entsprechen, welche durch die Reaktion eines fluorierten Alkohols gewählt aus der Gruppe bestehend aus 2,2,2-Trifluorethanol, 1,1,1,3,3,3-Hexafluorisopropanol, 1,1,1,2,3,3-Hexafluorbutanol, Heptadecafluornonanol, und F(CF₂CF₂)₃₋₈CH₂CH₂O-(CH₂CH₂O)_{X}H, worin X = 1 bis 20, gebildet werden.

3. Die Zusammensetzung von Anspruch 1, worin das aromatische Polycarbonatharz ein Co-Polycarbonat ist gewählt aus der Gruppe bestehend aus einem Polyarylester-Co-aromatischen Polycarbonat, einem Polyalkylester-Co-aromatischen Polycarbonat, und einem Polydimethylsiloxan-Co-aromatischen Polycarbonat Block-Copolymer.

4. Die Zusammensetzung von Anspruch 3, worin das aromatische Polycarbonatharz ein Polydimethylsiloxan-Co-Polycarbonat Block-Copolymer ist, welches Reste gebildet aus Eugenol, 2-Allylphenol oder 4-Allylphenol hat.

5. Die Zusammensetzung von Anspruch 1, die weiter ein thermoplastisches Polymer gewählt aus der Gruppe bestehend aus einem aromatischen Polycarbonat, einem Polyarylester-Co-aromatischen Polycarbonat, einem Polyalkylester-Co-aromatischen Polycarbonat, einem Polydimethylsiloxan-Co-aromatischen Polycarbonat Block-Copolymer, einem Polyester und einem Polyimid umfasst.

6. Eine Polycarbonatzusammensetzung gemäß Anspruch 1, worin das aromatische Polycarbonatharz mindestens einige aromatische Carbonatendgruppen umfasst, die nicht fluoriert sind.

7. Ein Verfahren zur Verbesserung der Flammhemmung einer Polycarbonatharzformulierung umfassend das Kombinieren eines aromatischen Polycarbonatharzes, wobei das aromatische Polycarbonatharz Fluoralkylencarbonatendgruppen besitzt, und eines flammenhemmenden Zusatzstoffes gewählt aus der Gruppe bestehend aus C₂₋₁₆ Perfluoralkylsulfonatsalzen und Kaliumdiphenylsulfonsulfonat, worin die Fluoralkylencarbonatendgruppen 90% oder mehr der Gesamtendgruppen des aromatischen Polycarbonatharzes umfassen.

8. Ein Artikel umfassend die Zusammensetzung gemäß irgendeinem der Ansprüche 1 bis 6.

9. Ein Verfahren zur Herstellung eines flammenhemmenden Polycarbonatharzes mit Fluoralkylencarbonatendgruppen, wobei das Verfahren die folgenden Schritte umfasst: Erzeugen eines Fluoralkylenchlorformiats und dann Hinzufügen des Fluoralkylenchlorformiats zu einer Mischung umfassend eine aromatische Dihydroxyverbindung, Phosgen, ein organisches Lösungsmittel, Wasser, eine organische Base, und eine anorganische Base, und weiter Hinzufügen eines anorganischen Flammhemmers umfassend mindestens eines von einem Salz von C₂₋₁₆ Perfluoralkylsulfonatsalzen oder Kaliumdiphenylsulfonsulfonat oder Mischungen daraus.

10. Ein Verfahren zur Herstellung eines flammenhemmenden Polycarbonatharzes, das folgendes umfasst: Schmelzkondensieren einer Mischung umfassend einen fluorierten Alkohol, eine aromatische Dihydroxy aromatische Verbindung, ein Diarylcarbonat in der Anwesenheit eines Umesterungskatalysators, und weiter Hinzufügen eines Flammhemmers umfassend mindestens eines von einem Salz von C₂₋₁₆ Perfluoralkylsulfonatsalzen oder Kaliumdiphenylsulfonsulfonat oder Mischungen daraus.

## Revendications

1. Composition de polycarbonate comprenant : une résine polycarbonate aromatique ayant des groupes terminaux en carbonate de fluoroalkylène et un additif faisant office d'agent ignifuge, sélectionné dans le groupe composé de sels de sulfonate de perfluoroalkyle en C_{2 à 16}, et un sulfonate du potassium diphénylsulfone, dans laquelle les groupes terminaux en carbonate de fluoroalkylène comprennent 90 % ou plus des groupes terminaux totaux de la résine polycarbonate aromatique.

2. Composition selon la revendication 1, dans laquelle les groupes terminaux en carbonate de fluoroalkylène ont des structures correspondant à des groupes terminaux formés par la réaction d'un alcool fluoré sélectionné dans le groupe composé du 2,2,2-trifluoroéthanol, 1,1,1,3,3,3-hexafluoro-isopropanol, 1,1,1,2,3,3-hexafluorobutanol, heptadécafluorononanol, et F(CF₂CF₂)_{3à8}CH₂CH₂O-(CH₂CH₂O)ₓH, dans laquelle W = 1 à 20.

3. Composition selon la revendication 1, dans laquelle la résine polycarbonate aromatique est un co-polycarbonate sélectionné dans le groupe composé d'un polyarylester-co-polycarbonate aromatique, un polyalkylester-co-polycarbonate aromatique, et un copolymère bloc polydiméthylsiloxane-co-polycarbonate aromatique.

4. Composition selon la revendication 3, dans laquelle la résine polycarbonate aromatique est un copolymère bloc polydiméthylsiloxane-co-polycarbonate, ayant des résidus formés à partir d'eugénol, 2-allylphénol ou 4-allylphénol.

5. Composition selon la revendication 1, comprenant en outre un polymère thermoplastique, sélectionné dans le groupe composé d'un polycarbonate aromatique, un polyarylester-co-polycarbonate aromatique, un polyalkylester-co-polycarbonate aromatique, un copolymère bloc polydiméthylsiloxane-co-polycarbonate aromatique, un polyester, et un polyimide.

6. Composition de polycarbonate selon la revendication 1, dans laquelle la résine polycarbonate aromatique comprend au moins certains groupes terminaux en carbonates aromatiques qui ne sont pas fluorés.

7. Procédé pour améliorer le caractère ignifuge d'une formulation de résine polycarbonate combinant une résine polycarbonate aromatique, ladite résine polycarbonate aromatique ayant des groupes terminaux en carbonate de fluoroalkylène, et un additif faisant office d'agent ignifuge, sélectionné dans le groupe composé de sels de sulfonate de perfluoroalkyle en C_{2 à 16}, et un sulfonate du potassium diphénylsulfone, dans lequel les groupes terminaux en carbonate de fluoroalkylène comprennent 90 % ou plus des groupes terminaux totaux de la résine polycarbonate aromatique.

8. Article comprenant la composition selon l'une quelconque des revendications 1 à 6.

9. Procédé de fabrication d'une résine polycarbonate ayant des propriétés de retard de flamme, ayant des groupes terminaux en carbonate de fluoroalkylène, ledit procédé comprenant les étapes de production d'un chloroformate de fluoroalkylène et, ensuite, l'addition du chloroformate de fluoroalkylène à un mélange comprenant un composé dihydroxy aromatique, le phosgène, un solvant organique, l'eau, une base organique, et une base non organique, et, en outre, l'addition d'un agent ignifuge non organique comprenant au moins l'un d'un sel parmi les sels de sulfonate de perfluoroalkyle en C_{2 à 16}, ou un sulfonate du potassium diphénylsulfone, ou un mélange de ceux-ci.

10. Procédé de fabrication d'une résine polycarbonate à caractère ignifuge comprenant la condensation de fusion d'un mélange comprenant un alcool fluoré, un composé dihydroxy aromatique, un carbonate de diaryle, en présence d'un catalyseur de transestérification, et, en outre, l'addition d'un agent ignifuge comprenant au moins l'un d'un sel parmi les sels de sulfonate de perfluoroalkyle en C_{2 à 16}, ou un sulfonate du potassium diphénylsulfone, ou un mélange de ceux-ci.
